# EUROPÄISCHE PATENTSCHRIFT

(11) **EP 0 525 286 B1**
(45) Veröffentlichungstag und Bekanntmachung des Hinweises auf die Patenterteilung: **11.09.1996**
(21) Anmeldenummer: 92103251.2
(22) Anmeldetag: 26.02.1992
(51) Int. Cl.: G01N 21/88, G01N 21/47

(54) **Einrichtung für Oberflächeninspektionen**
Surface inspection apparatus
Appareil de contrôle de surface

(30) Priorität: 20.07.1991 CH 2154/91
(43) Veröffentlichungstag der Anmeldung: 03.02.1993
(73) Patentinhaber: TENCOR INSTRUMENTS, Mountain View, CA 94043 (US)
(72) Erfinder: Malin, Cosmas, Dipl. El. Ing./ETH, FL-9493 Mauren (LI); Steigmeier, Edgar F., Dr. Ing./ETH, CH-8908 Hedingen (CH); Nesensohn, Thomas, A-6832 Batschuns (AT); Sawatzki, Harry L., FL-9494 Schaan (LI); Auderset, Heinrich, CH-8914 Aeugst a.A. (CH); Schmid, Gert, A-6712 Thüringen (AT)
(74) Vertreter: Fiener, Josef

(56) Entgegenhaltungen:
- EP-A- 0 290 228
- EP-A- 0 398 781
- DE-A- 3 814 606
- US-A- 4 314 763
- US-A- 4 508 450
- RCA REVIEW Bd. 44, Nr. 1, März 1983, PRINCETON US Seiten 5 - 18 E.F. STEIGMEIER ET AL 'Optical scanner for dust and defect detection'
- PATENT ABSTRACTS OF JAPAN vol. 10, no. 327 (P-513)7. November 1986 & JP-A-61 133 843 ( HITACHI ELECTRONICS ) 21 Juni 1986
- OPTICS AND LASER TECHNOLOGY Bd. 12, Nr. 6, Dezember 1980, HAYWARDS HEATH GB Seiten 317 - 320 'Automatic inspection of silicon wafers'
- PATENT ABSTRACTS OF JAPAN vol. 12, no. 403 (E-674)26. Oktober 1988 & JP-A-63 143 830 ( HITACHI ELECTRONICS ) 16 Juni 1988
- PATENT ABSTRACTS OF JAPAN vol. 14, no. 345 (P-1083)26. Juli 1990 & JP-A-02 123 539 ( HITACHI ELECTRONICS ) 11 Mai 1990

## Beschreibung

Die Erfindung betrifft eine Einrichtung für Oberflächeninspektionen, mit einer einen Beleuchtungsstrahl erzeugenden Lichtquelle, mit einem Objektiv und mit einer Auflagescheibe, auf der das zu inspizierende Objekt angeordnet ist, wobei der Beleuchtungsstrahl durch das Objektiv senkrecht auf die Oberfläche des Objektes gerichtet ist und die Auflagescheibe auf einem Antrieb befestigt ist, der eine aus einer Rotation und einer Translation zusammengesetzte Bewegung ausführt, so dass die Oberfläche des Objektes mittels des Beleuchtungsstrahles spiralförmig abgetastet wird, und wobei ein Photodetektor vorgesehen ist, auf welchen das von der Oberfläche des Objektes abgestrahlte und im Objektiv gesammelte Licht gerichtet ist, und dessen Ausgang mit einem Verstärker in Verbindung steht.

Mit derartigen Einrichtungen können beispielsweise in der Mikro-elektronik Oberflächen von Wafern, Magnetspeichermedien und/oder Substraten für optische Anwendungen zerstörungsfrei auf etwa vorhandene Defekte kontrolliert bzw. inspiziert werden.

Mit der **US-PS 4,314,763** ist eine Einrichtung gemäss obenstehenden Merkmalen bekannt geworden, bei welcher ein Beleuchtungsstrahl einer Lichtquelle in Form eines Lasers über zwei Prismen und ein Objektiv senkrecht auf die Oberfläche eines zu kontrollierenden bzw. zu inspizierenden Objektes projiziert wird. Das Objekt ist auf einer Unterlage befestigt, die mit einer Welle eines Stirnradantriebes verbunden ist. Der Stirnradantrieb ist auf einer Platte montiert, welche mittels eines Motors geradlinig verschoben werden kann. Bei einer Kontrolle der Oberfläche eines Objektes überlagert sich die Rotationsbewegung der Unterlage und die Translationsbewegung der Platte derart, dass bei feststehendem optischem System die Oberfläche des zu inspizierenden Objektes mittels des Beleuchtungsstrahles spiralförmig abgetastet wird. Die von der Oberfläche gestreuten und gebeugten Strahlen werden über das Objektiv auf einen Photodetektor gerichtet, welcher bei Beleuchtung eines Defektes ein elektrisches Signal erzeugt, das einem Verstärker zugeführt wird. Dem Verstärker ist ein Zähler und ein Bildschirm nachgeschaltet, wobei im Zähler die der Anzahl der Defekte entsprechende Anzahl der verstärkten elektrischen Signale gezählt werden, und auf dem Bildschirm deren räumliche Verteilung dargestellt wird. Eine ähnliche Vorrichtung ist in einem Artikel von E.F. Steigmeier und H. Auderset in RCA Review (Bd.44, Nr.1, März 83, Seiten 5-18) offenbart. Da derartige Einrichtungen eine hohe Empfindlichkeit aufweisen, die unter anderem auf die Tatsache zurückzuführen ist, dass durch die statische Optik lediglich das Streulicht der kleinen beleuchteten Fläche im Photodetektor abgebildet werden muss, können kugelige und/oder flächenförmige Defekte bis zu einer Grössenordnung von ungefähr 1µm festgestellt und erkannt werden. Aufgrund guter Abbildungseigenschaften, die durch ein optisch hochwertiges, korrigiertes Objektiv erreicht werden und wegen des Umstandes, dass das Streulicht der beleuchteten Fläche um einen Winkel von 360° aufgefangen und im Photodetektor abgebildet wird, erreichen solche Einrichtungen eine hohe Effizienz in der Streulicht-erfassung.

Obige Einrichtungen müssen gleichzeitig hohe Empfindlichkeiten und Messgeschwindigkeiten aufweisen. Limitierende Faktoren sind einerseits die endliche mechanische Scangeschwindigkeit und andererseits die für die Messung mit steigender Geschwindigkeit ebenfalls grösser werdende Bandbreitenanforderung an das Messystem. Die Endlichkeit für die Scangeschwindigkeit liegt in der Haltevorrichtung des Substrates, in den Lagern und im Antrieb der Substratauflage und schliesslich in dem Material des Sustrates selbst begründet. Die Notwendigkeit für die höhere Bandbreite bei grösseren Messgeschwindigkeiten ergibt sich daraus, dass das Signal eines Defektes umso kürzer wird, je schneller dieser gegenüber der beleuchteten Fläche bewegt wird. Mit steigender Bandbreite nehmen Verstärker- und Photonenrauschen zu. In der Praxis steht besonders das Photonenrauschen der Vergrösserung der Bandbreite entgegen.

Bei der Steigerung der Messgeschwindigkeit muss darauf geachtet werden, dass die für die Analyse von Defekten notwendige hohe Ortsauflösung nicht reduziert wird. Eine hohe ortsauflösung erlaubt die genaue Wiedergabe des Verlaufes eines Defektes oder die Messung dessen exakter Lage auf der Oberfläche. Besonders für eine auf eine reine Inspektion folgende Analyse von Defekten, beispielsweise mittels eines Elektronenmikroskopes, sind genaue Kenntnisse der zu inspizierenden Stelle der Oberfläche und deren genaue Vermassung äusserst hilfreich.

Der Erfindung liegt daher die Aufgabe zugrunde eine Einrichtung gemäss Oberbegriff des unabhängigen Patentanspruches zu schaffen, die gegenüber dem vorstehend genannten Stand der Technik eine höhere Ortsauflösung bei gleichzeitiger Steigerung der Messempfindlichkeit und -geschwindigkeit zulässt.

Diese Aufgabe wird durch die im Patentanspruch **1** gekennzeichnete Erfindung gelöst. Hierbei ist im Strahlengang zwischen Lichtquelle und Objektiv ein in verschiedene Stellungen steuerbares Linsensystem angeordnet. Je nach Stellung des Linsensystems werden verschiedene Zwischenbilder erzeugt, wobei bei einer ersten Abtastung der Oberfläche des Objektes ein erstes Zwischenbild und bei einer zweiten Abtastung ein zweites Zwischenbild verwendet wird, und wobei der Vorschub bei der Abtastung dem jeweils verwendeten Zwischenbild angepasst wird. Eine im Strahlengang zwischen dem Linsensystem und dem Objektiv angeordnete Dunkelfeldstop-Baugruppe mit einer einstellbaren Dunkelfeldumlenkung, richtet den Beleuchtungsstrahl nach der Umlenkung exakt zentrisch und im rechten Winkel durch das Objektiv auf das zu inspizierende Objekt.

Zwecks Verarbeitung der Messdaten ist eine Auswerteelektronik vorgesehen, die eingangsseitig mit dem, dem Photodetektor nachgeschalteten Verstärker verbunden ist. Die Auswerteelektronik zerlegt das vom Verstärker erzeugte Ausgangssignal in Messwerte, die von punktförmigen, linienförmigen und flächenförmigen Defekten der Oberfläche des inspizierenden bzw. kontrollierenden Objektes herrühren.

Eine Anordnung zur Ermittlung der jeweiligen momentanen Abtastposition des Beleuchtungsstrahles auf der Oberfläche des Objektes ist mit Peripheriegeräten verbunden, mittels welchen die Gesamtheit aller Messwerte einer Messung in den zugeordneten Abtastpositionen dargestellt werden kann.

Mit der Erfindung werden die nachfolgend beschriebenen Vorteile erzielt:
- Durch Umschaltung des Linsensystems kann wahlweise die gesamte Oberfläche oder Ausschnitte derselben inspiziert werden.
- Der durch das umschaltbare Linsensystem erzeugte astigmatische Beleuchtungsstrahl überstreicht beim Abtasten eine grössere Fläche und erlaubt somit einen grösseren Vorschub zwischen zwei sich folgenden Umdrehungen. Der punktförmige Beleuchtungsstrahl wird hingegen bei kleinem Vorschub eingesetzt, so dass eine Untersuchung der zu inspizierenden Oberfläche mit hoher Ortsauflösung möglich ist.
- Mit der Einrichtung können beliebige Ausschnitte der Oberfläche betrachtet und dargestellt werden.
- Die Grösse des inpizierten Ausschnittes ist frei wählbar.
- Die Messung eines Ausschnittes ist mit einer Messempfindlichkeitssteigerung gegenüber der Messung der gesamten Oberfläche verbunden.
- Es können alle gängigen Defekte, wie punktförmige Defekte (Light point defects LPD's), linienförmige Defects (Line defects) und Flächendefekte (Haze) auf Oberflächen und in oberflächennahen Regionen zerstörungsfrei und schnell lokalisiert, inspiziert und quantifiziert werden.
- Die Messresultate werden in der wählbaren Orientierung -zum Beispiel zum Waferflat- dargestellt.
- Das Messresultat der ausschnittweisen Messung wird als aufrecht stehendes Bild dargestellt.

Im folgenden wird die Erfindung anhand mehrerer in den einzelnen Figuren dargestellter Ausführungsbeispiele näher erläutert. Es zeigen:
- **Fig. 1**: eine schematische Darstellung der erfindungsgemässen Einrichtung anhand eines ersten Ausführungsbeispiels.
- **Fig. 2a 2b 2c**: vereinfachte Darstellungen der StreulichtintensitätsVerteilung einer Oberfläche mit hohem Hazepegel (**2a**) und mit niedrigem Hazepegel (**2b**) sowie einer hypothetischen Oberfläche ohne Defekte und reiner Reflexion (**2c**),
- **Fig. 3a 3b 3c**: drei Ausführungsbeispiele für umschaltbare Linsensysteme der Einrichtung des ersten Ausführungsbeispiels gemäss **Fig. 1**,
- **Fig. 4a 4b 4c**: drei Ausführungsbeispiele für eine Dunkelfeldstop-Baugruppe der Einrichtung des ersten Ausführungsbeispiels gemäss **Fig. 1**,
- **Fig. 5a**: ein Blockschema einer Auswerteelektronik der Einrichtung des ersten Ausführungsbeispiels gemäss **Fig. 1**,
- **Fig. 5b**: eine detailierte Darstellung eines Ausschntts der Auswerteelektronik gemäss **Fig. 5a**,
- **Fig. 6a 6b**: einen typischen Signalverlauf am Photodetektor der Einrichtung aus dem ersten Ausführungsbeispiel gemäss **Fig. 1** am Rand eines zu inspizierenden Objektes (**Fig. 6a**) und im Zentrum des Objektes (**Fig. 6b**),
- **Fig. 7a**: eine schematische Darstellung eines Teiles der ObjektOberfläche und einer Einteilung in imaginäre Messflächen,
- **Fig. 7b**: eine schematische Darstellung einer Adressentabelle für die den imaginären Messflächen gemäss **Fig. 7a** zugeordneten Adressen,
- **Fig. 7c**: einen Ausschnitt der für die Darstellung der auf die Messflächen gemäss **Fig. 7a** bezogenen Messergebnisse benötigten Pixelfläche,
- **Fig. 7d**: eine schematische Darstellung des Messverlaufes bei der ausschnittsweisen Messung der Oberfläche,
- **Fig. 8a**: ein typisches Messbild der gesamten Oberfläche mit Fadenkreuz,
- **Fig. 8b**: ein typisches Messbild eines Ausschnittes der Oberfläche von **Fig. 8a**,
- **Fig. 8c**: ein Messbild eines vergrösserten Ausschnittes der Oberfläche von **Fig. 8b**,
- **Fig. 9**: ein Flussdiagramm zur Verdeutlichung der Messwertaufnahme,
- **Fig. 10**: eine Gesamtansicht einer auf der Grundlage der Einrichtung gemäss **Fig. 1** ausgeführten Wafer-Inspektions-Einrichtung, und
- **Fig. 11**: ein Ablaufdiagramm des Messvorganges.

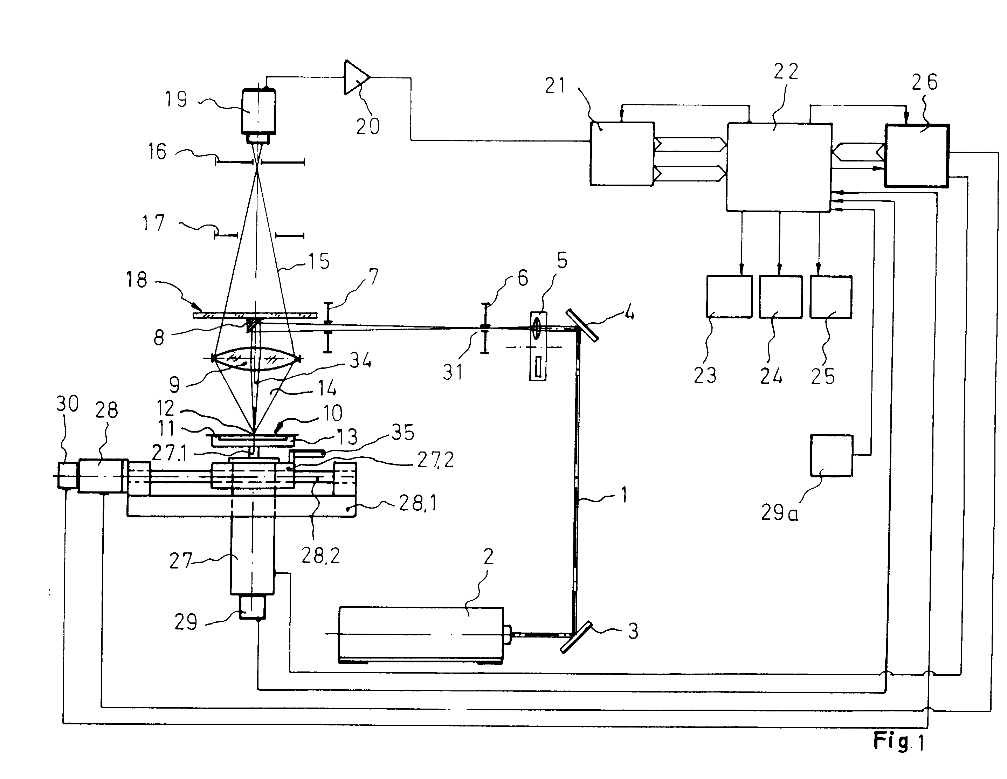

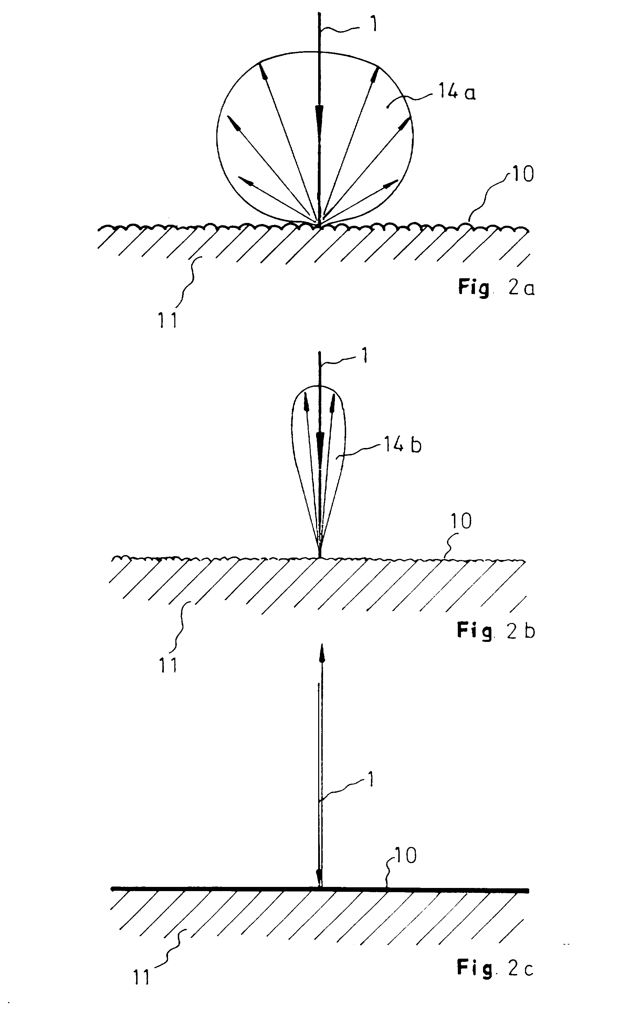

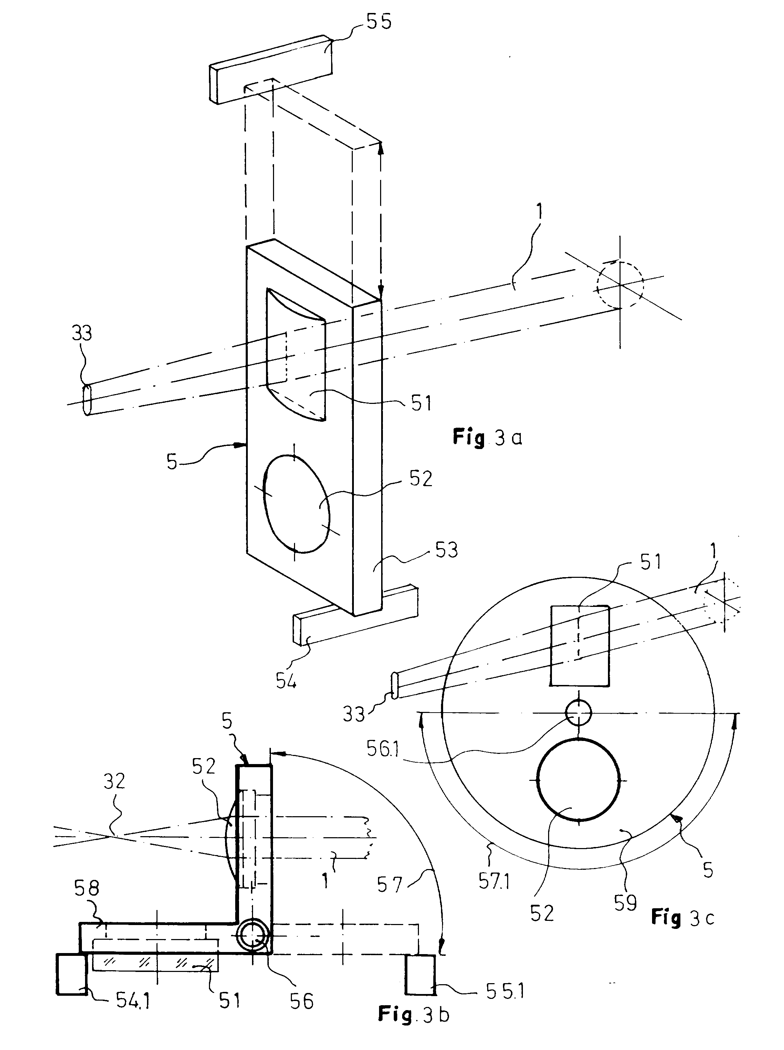

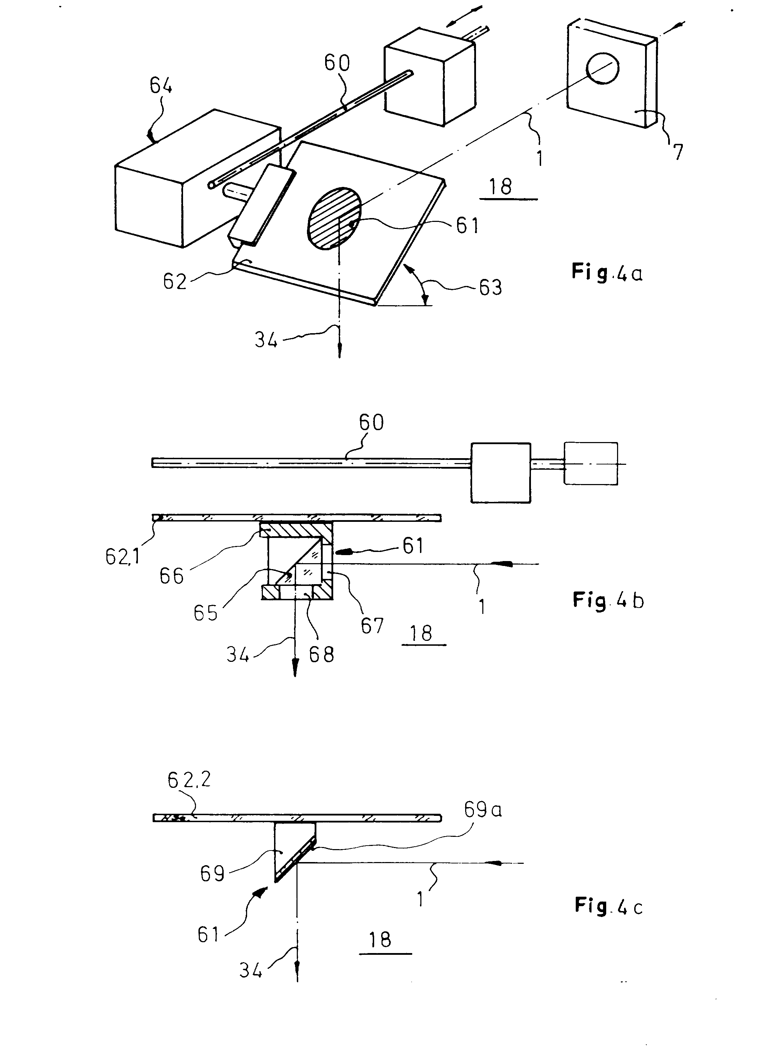

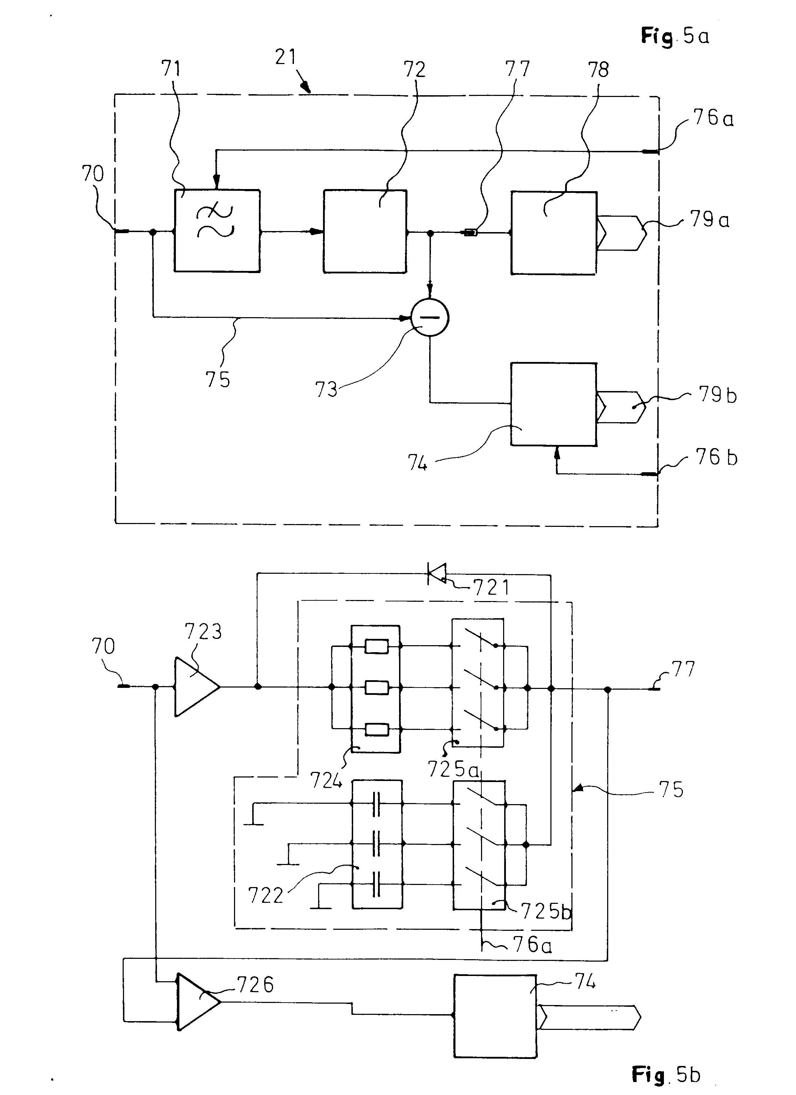

In der **Fig. 1**, einem ersten Ausführungsbeispiel der erfindungsgemässen Einrichtung, ist mit **1** ein Beleuchtungsstrahl einer Lichtquelle **2** bezeichnet, wobei die Lichtquelle **2** ein Laser ist, der Licht von sehr kurzer Wellenlänge, beispielsweise 488 oder 325 nm aussendet.
Der Beleuchtungsstrahl **1** wird über Umlenkspiegel bzw. Prismen **3**, **4**, eines anhand der **Fig. 3a, 3b** und **3c** nachfolgend näher beschriebenen steuerbaren Linsensystems **5**, Blenden **6**, **7**, einer Dunkelfeldumlenkung **8** und eines Objektivs **9** senkrecht auf eine Oberfläche **10** eines Objektes in Form eines Substrates **11** gerichtet und bildet dort einen Beleuchtungsspot **12**. Das Substrat **11** ist auf einer Auflagescheibe **13** angeordnet, die in einer senkrecht zum Beleuchtungsstrahl **1** verlaufenden Ebene liegt. Mit **14** ist eine von der Oberfläche **10** abgestrahlte Streulichtkeule (**Fig. 2a, 2b, 2c**) und mit **15** ein vom Objektiv **9** gesammelter Lichtkegel bezeichnet. Der Lichtkegel **15** ist durch eine Vorblende **17** und eine konfokale Blende **16** auf einen Photodetektor **19** gerichtet, welcher über einen Verstärker **20** mit einer anhand der **Fig. 5a** und **5b** näher beschriebenen Auswerteelektronik **21** verbunden ist. Die Auswerteelektronik **21** ist an eine Recheneinheit **22** angeschlossen, die mit Peripheriegeräten, wie beispielsweise Massenspeicher **23**, Bildschirm **24** und Drucker **25** in Verbindung steht. Mit **18** ist eine anhand der **Fig. 4a, 4b** und **4c** näher beschriebene Dunkelfeldstop-Baugruppe bezeichnet, an welcher die Dunkelfeldumlenkung **8** angeordnet ist. Die Auflagescheibe **13** ist mit einer Welle **27.1** eines Rotationsmotors **27** verbunden, der an einem Lineartisch **27.2** befestigt ist. Der Lineartisch **27.2** sitzt auf einer, an einem Träger **28.1** gelagerten Spindel **28.2**, die von einem Translationsmotor **28** angetrieben wird. Der Rotationsmotor **27** und der Translationsmotor **28** stehen über ein Interface **26** mit der Recheneinheit **22** in Verbindung Ein mit der Achse des Rotationsmotors **27** gekoppelter Rotationsimpulsgeber **29** und ein mit der Achse des Translationsmotors **28** gekoppelter Translationsimpulsgeber **30** in Form eines Encoders, sowie ein Impulsgenerator **29a** in Form eines elektronischen Rechteckgenerators sind an der Recheneinheit **22** angeschlossen. Die Teile **27, 27.1, 27.2, 28, 28.1, 28.2** bilden einen Antrieb, der eine aus einer Rotation und einer Translation zusammengesetzte Bewegung erzeugt. Mit **31** ist ein vom steuerbaren Linsensystem **5** erzeugtes Zwischenbild und mit **34**, die optische Achse des Objektivs **9** bezeichnet. Unterhalb der Auflagescheibe **13** ist am Lineartisch **27.2** eine lichtempfindliche Vorrichtung **35** angeordnet.

Gemäss **Fig. 2a** besitzen Oberflächen mit physikalisch grossen Defekten flachere, parallel zur Oberfläche **10** ausgeprägte Streulichtintensitätsverteilungen und somit eine breitere Streulichtkeule **14a**. Wie hingegen in der **Fig. 2b** dargestellt, haben Oberflächen mit physikalisch kleinen, dichten Streuzentren eine achsennahe Streulichtkeule **14b**, wobei die Streulichtkeulen **14a, 14b** aus an der Oberfläche **10** gebeugtem, gestreutem und reflektiertem Licht des Beleuchtungsstrahles **1** gebildet sind. Der Uebergang von breiten, ausladenden Streulichtkeulen **14a** auf schmälere, achsennahe Streulichtkeulen **14b** ist auf die Tatsache zurückzuführen, dass Oberflächen mit zunehmender Perfektion, d.h. deren Streuzentren immer kleinere Dimension aufweisen, eine zunehmende Ausprägung an Vorwärtsstreuung aufweisen, so dass im Extremfall (**Fig. 2c**) reine Reflexion des Beleuchtungsstrahles **1** vorhanden ist.

Gemäss den **Fig. 3a, 3b** und **3c** besteht das Linsensystem **5** aus wenigstens zwei wechselweise in den Beleuchtungsstrahl **1** schwenkbare Linsen **51**, **52**. Die eine Linse erzeugt dabei ein astigmatisches Zwischenbild **33**. Vorzugsweise ist die erste Linse eine Zylinderlinse **51** und die zweite Linse eine sphärische Linse **52**. Beide Linsen besitzen eine gemeinsame Brennweite. In den Beleuchtungsstrahl **1** geschwenkt, ist das erste Zwischenbild **31** beider Linsen somit am gleichen Ort. Ist die Zylinderlinse **51** eingeschwenkt, so entsteht ein zigarrenförmiges erstes Zwischenbild **33**, ist die sphärische Linse eingefahren, entsteht ein punktförmiges zweites Zwischenbild **32**.
Der astigmatische (zigarrenförmige) Beleuchtungsstrahl **1** überstreicht beim Abtasten eine grössere Fläche und erlaubt somit einen grösseren Vorschub zwischen zwei Umdrehungen. Ein punktförmiger Beleuchtungsstrahl ist kleiner und hat eine höhere Leuchtdichte. Der punktförmige Beleuchtungsstrahl wird somit in Verbindung mit einem entsprechend kleinen Vorschub verwendet und dient zur Untersuchung der Oberfläche mit hoher Ortsauflösung (ähnlich einem Scanning Laser Beam Microscope). Vorzugsweise werden mit dem punktförmigen Beleuchtungsstrahl **1** nur ausgewählte Fragmente der Oberfläche untersucht.

Wie **Fig. 3a** zeigt sind die beiden Linsen **51**, **52** auf einem Schlitten **53** angebracht und können über eine Linearbewegung abwechselnd in den Beleuchtungsstrahl **1** gefahren werden. Die Linsen **51**, **52** sind gegeneinander auf nicht dargestellte Weise justierbar. Die Position der Linsen nach der Linearbewegung ist durch ebenfalls justierbare Anschläge **54**, **55** bestimmt.

Gemäss **Fig. 3b** sind die Linsen **51**, **52** auf einer Achse **56** senkrecht zum Beleuchtungsstrahl **1** um einen bestimmten Schwenkwinkel **57** schwenkbar gelagert. Die Linsen **51**, **52** sind dabei auf einer L-förmigen Trägerplatte **58** montiert. Der Winkel dieser L-förmigen Trägerplatte ist gleich dem Schwenkwinkel **57**. Die Endpositionen sind ebenfalls durch Anschläge **54.1**, **55.1** definiert.

Nach der **Fig.3c** sind die Linsen **51**, **52** auf einer Scheibe **59** angeordnet, die drehbar auf einer Achse **56.1**, die parallel zum Beleuchtungsstrahl **1** verläuft, gelagert ist. Hierbei werden die Linsen durch eine Drehbewegung um einen Winkel **57.1** in den Beleuchtungsstrahl **1** gefahren.

Als Antriebsquelle für die Linsensysteme können Elektromotoren, elektrische Dreh- oder Hubmagnete oder pneumatische Antriebe wie Linear- oder Drehzylinder dienen. Zur eindeutigen Erkennung der Lage der eingefahrenen Linse, können die Anschläge mit Endschaltern oder induktiven Näherungsschaltern ausgestattet sein. Diese erlauben eine Positionsabfrage der Steuerungselektronik.

Gemäss **Fig. 4a** weist die Dunkelfeldstop-Baugruppe **18** einen Dunkelfeldstop **61** auf, der direkt in eine Dunkelfeldstop-Trägerplatte **62** integriert ist und welcher der Dunkelfeldumlenkung **8** (**Fig. 1**) entspricht. Das Zentrum der Dunkelfeldstop-Trägerplatte ist mit einem das Licht des Beleuchtungsstrahls **1** reflektierenden Material beschichtet ist. Die Form der reflektierenden Fläche des Dunkelfeldstops **61** ist dabei so, dass die Projektion der Dunkelfeldstop-Baugruppe **18** entlang der optischen Achse **34** kreissymmetrisch ist. Bei einem Neigungswinkel **63** von > O° ist diese Form der reflektierenden Fläche die einer elliptischen Scheibe. Die Dunkelfeldstop-Trägerplatte **62** selbst ist aus einem Material, das für die Wellenlängen des Beleuchtungslichtes transmittierend ist (z.B. Glas oder Quarzglas). Zur Optimierung der Reflexion bzw. Transmission können die Oberflächen von Dunkelfeldstop und Dunkelfeldstop-Trägerplatte optisch vergütet sein.

Die Dunkelfeldstop-Trägerplatte **62** ist von einer Haltevorrichtung **64** mechanisch so aufgenommen, dass sie zur Strahljustierung verschoben bzw. gedreht werden kann. Diese Justierung kann über nicht dargestellte Stellschrauben vorgenommen werden. Die endgültige Position wird in diesem Fall durch ebenfalls nicht dargestellte Klemmschrauben gesichert.

Nach **Fig. 4b** ist der Dunkelfeldstop **61** als Prisma **65** ausgeführt. Der Beleuchtungsstrahl **1** wird hier durch Totalreflexion an der schrägen Prismenoberfläche umgelenkt. Das Prisma **65** ist von einem Prismenhalter **66** aufgenommen. Der Prismenhalter **66** ist an der Dunkelfeldstop-Trägerplatte **62.1** befestigt. Der Prismenhalter **66** ist zylinderförmig, so dass seine Projektion entlang der optischen Achse **34** der Abbildungsoptik kreissymmetrisch ist. Der Beleuchtungsstrahl **1** gelangt durch eine erste Oeffnung **67** im Prismenhalter **66**. Die erste Oeffnung **67** und eine zweite Oeffnung **68** verhindern, dass unerwünschtes Licht in den Randzonen des Beleuchtungsstrahls **1** passieren kann.

Gemäss **Fig. 4c** geschieht die Umlenkung des Beleuchtungsstrahls **1** an der schrägen Fläche eines zylindrischen Körpers **69**. Die schräge Fläche ist dabei verspiegelt. Der zylindrische Körper ist an einer Dunkelfeldstop-Trägerplatte **62.2** befestigt.

Die Dunkelfeld-Trägerplatten (**62.1**, **62.2**) in den **Fig. 4b** und **4c** sind ebenfalls justierbar gelagert. Der Vorteil dieser Ausführungsbeispiele gegenüber dem ersten liegt darin, dass die reflektierende Fläche des Dunkelfeldstops **61** näher an das Objektiv **9** (**Fig. 1**) gebracht werden kann. Eine möglichst nahe Position des Dunkelfeldstops **61** zum Objektiv **9** bringt eine kleine abgeschattete Fläche im Streulichtkegel und ist somit vorteilhaft.

In den **Fig. 4a** und **4b** ist mit **60** eine Abschattungsvorrichtung bezeichnet, mittels welcher wahlweise eine Assymmetrie in die Abbildungsoptik eingebracht werden kann. Mit dieser Abschattungsvorrichtung **60** lassen sich z.B. durch zweimaliges Messen - einmal mit und einmal ohne Abschattungsvorrichtung **60** - gerichtete Hazestrukturen von ungeordneten unterscheiden. Zur Erkennung von eindimensionalen Defektstrukturen - wie z.B. Polierfehler - ist die Form dieser Abschattungsvorrichtung **60** die eines Stabes. Zur gezielten Unterdrückung und/oder Selektion von anderen Strukturen, sind andere Formen der Abschattungsvorrichtung **60** möglich.

Der vorstehend beschriebene optische Teil der Einrichtung arbeitet wir folgt:
Der über die Prismen **3, 4** umgelenkte Beleuchtungsstrahl **1** fällt durch das Linsensystem **5** und die Blenden **6, 7** auf die Dunkelfeldumlenkung **8**, wo er wiederum umgelenkt wird. Die Dunkelfeldumlenkung **8**, bzw. der Dunkelfeldstop **61** ist derart justiert, dass der umgelenkte Beleuchtungsstrahl **1** nach der Umlenkung exakt zentrisch und im rechten Winkel durch das Objektiv **9** tritt, und somit nach der Umlenkung exakt in der optischen Achse **34** des Objektives und damit der gesamten Abbildungsoptik verläuft. Das Objektiv **9** fokussiert den Beleuchtungsstrahl **1** auf die Substratoberfläche **10**, so dass das von dem Linsensystem **5** erzeugte Zwischenbild **31** auf die Substratoberfläche **10** abgebildet wird. Da der Beleuchtungsstrahl **1** senkrecht auf die Substratoberfläche **10** fällt, verläuft das reflektierte Licht exakt entlang des einfallenden Beleuchtungsstrahls **1** und trifft nach dem Objektiv erneut auf den Dunkelfeldstop **61** von dem dieser wiederum in Richtung der Lichtquelle **2** umgelenkt wird. Der gestreute bzw. gebeugte Anteil des Lichtes **14** wird unter dem Winkel der numerischen Apertur des Objektivs **9** gesammelt und in die konfokale Blende **16** abgebildet. Der Abstand zwischen Oberfläche **10** und der Oeffnung der konfokalen Blende **16** ist gleich dem gesteuerten Abstand des Zwischenbildes **31** von der Oberfläche **10**.

Sehr dichte und feine Defektstrukturen der Oberflächenfehler (Haze) erzeugen neben Streulicht auch einen gewissen Anteil an gebeugtem Licht. Dies ist durch Beugung am Gitter zu verstehen, wobei das Gitter durch die, durch die Defekte gebildete Struktur (z.B. Polierfehler), gebildet wird. Der Lichtkegel des auf diese Weise entstandenen Lichtes besitzt keine örtlich homogene Intensitätsverteilung. An der Stelle der Dunkelfeldstop-Baugruppe **18** weist das Licht deshalb eine bezüglich der optischen Achse **34** rotationssymmetrische Intensitätsverteilung auf (z.B. propeller-oder sternförmig). Die Richtung dieser Intensitätsverteilung hängt streng mit der Richtung der Struktur der Oberfläche **10** zusammen. D.h. rotiert das Substrat, rotiert das Intensitätsmuster synchron dazu.

Um durch Defekte gebildete Oberflächenstrukturen richtungsunabhängig messen zu können, ist die Dunkelfeldstop-Baugruppe **18** bzgl. der optischen Achse **34** völlig rotationssymmetrisch aufgebaut. Um ferner möglichst auch achsennahes Streulicht passieren zu lassen, muss der effektiv von Dunkelfeldstop **61** ausgeblendete Anteil des Streulichtkegels **14** möglichst klein sein. Mit der beschriebenen Einrichtung lässt sich das günstigste Verhältnis zwischen gesammelten und abgeschatteten Streulicht erzielen. Dabei bleibt die Rotationssymmetrie im Abbildungslicht völlig erhalten.

Das Objektiv **9** fokussiert das Streulicht **14** auf die konfokale Blende **16**. Die Oeffnung dieser konfokalen Blende **16** hat in etwa die Form des auf der Substratoberfläche fokussierten Beleuchungsstrahls (Beleuchtungsspot **12**). Im Falle der eingefahrenen Zyinderlinse **51** hat der Beleuchtungsspot **12** eine längliche Form; wobei die lange Beleuchtungsspotseite radial, die kurze Beleuchtungsspotseite tangential verläuft. Im Falle einer länglichen Beleuchtungsspotform ist die Oeffnung der konfokalen Blende 16 ein Schlitz, dessen Abmessungen etwa die mit dem Vergrösserungsfaktor der Abbildungsoptik multiplizierte Spotdimensionen haben. Dies hat den Vorteil, dass lediglich das Streulicht der vom Beleuchtungsstrahl **1** erhellten Stelle durch die Blendenöffnung zum Photodetektor **19** gelangt. In der Praxis macht sich dies durch Unempfindlichkeit gegen Umlicht und durch ein günstiges Signal/Rauschverhältnis bemerkbar. Im Falle des kreisförmigen Beleuchtungsspots **12** ist die konfokale Blende **16** eine kreisförmige Oeffnung, deren Durchmesser etwa dem mit dem Vergrösserungsfaktor der Abbildungsoptik multiplizierten Durchmesser des Beleuchtungsspots **12**, entspricht. Die Umschaltung unterschiedlicher konfokaler Blenden kann auf ähnliche Weise wie bei der Umschaltung der Linsen beim steuerbaren Linsensystem **5** geschehen.

Eine oder mehrere Vorblenden **17** im Abbildungsteil halten zusätzlich unerwünschtes Fremdlicht, z.B. von Reflexionen an Bauteilen, vom Photodetektor fern. Die Vorblenden begünstigten ebenfalls das Signal/Rauschverhältnis und lassen somit, wie die speziell geformte konfokale Blende **16**, die Messempfindlichkeit des Systems steigern.

Im Photodetektor **19** werden die optischen Signale in elektronische umgewandelt und im breitbandigen Verstärker **20** zur Weiterverarbeitung verstärkt. Das am Verstärkerausgang liegende Signal ist als Summe der Signale von Haze, LPD's und Liniendefekte aufzufassen. Dieses Signal muss in der Weiterverarbeitung in seine Einzelkomponenten zerlegt werden. Die Weiterverarbeitung des elektronischen Signals geschieht zunächst in der Auswerteelektronik **21**, wobei die Auswerteelektronik das Eingangssignal in die Hazesignale und die Signale der LPD's trennt.

Gemäss **Fig. 5a** weist die Auswerteelektronik **21** einen Singnaleingang **70** auf, der mit dem Ausgang des Verstärkers **20** (**Fig. 1**) und mit einem, aus einem Hazefilter **71** und einer Peakunterdrückung **72** bestehendem Hazekanal verbunden ist. Der Signaleingang **70** ist weiterhin mit einem Partikelkanal verbunden, der aus einer Subtrahierschaltung **73** und einem Peakdetektor **74** besteht. Mit **76a** ist ein mit dem Hazefilter **71** verbundener Bandbreitenvorgabe-Eingang und mit **76b** ein am Peakdetektor **74** angeschlossener weiterer Eingang bezeichnet. Ein Hazefilterausgang **77** steht mit einen Analog-Digital-Wandler **78** in Verbindung, dessen Ausgang mit **79a** bezeichnet ist. Der Peakdetektor **74** weist einen digitalen Ausgang **79b** auf.

In der **Fig. 5b** ist mit **75** ein Tiefpassfilter bezeichnet, das der wesentlichste Bestandteil des Hazekanals **71**, **72** (**Fig. 5a**) ist. Das Tiefpassfilter **75** besteht aus Filterkondensatoren **722**, Widerständen **724** und einer ersten und zweiten Schaltungseinrichtung **725a**, **725b**. Die Widerstände **724** sind an den einen Enden über die erste und die zweite Schaltungseinrichtung **725a**, **725b** mit den Filterkondensatoren **722** und dem Hazefilterausgang **77** (**Fig. 5a**) verbunden. Der Hazefilterausgang **77** steht über eine als Peakunterdrückung **72** dienende Diode **721** mit den anderen Enden der Widerstände **724** und dem Ausgang eines weiteren Verstärkers **723** in Verbindung. Der Eingang des weiteren Verstärkers **723** ist mit dem Signaleingang **70** (**Fig. 5a**) und mit dem nicht-invertierenden Eingang eines dritten Verstärkers **726** verbunden, der als Subtrahierer **73** (**Fig. 5a**) dient. Der invertierende Eingang des dritten Verstärkers **726** ist am Hazefilterausgang **77** angeschlossen, während sein Ausgang mit dem Eingang des Peakdetektors **74** in Verbindung steht. Die Schalteinrichtungen **725a**, **725b** können über den Bandbreitevorgabe- Eingang **76a** betätigt werden.

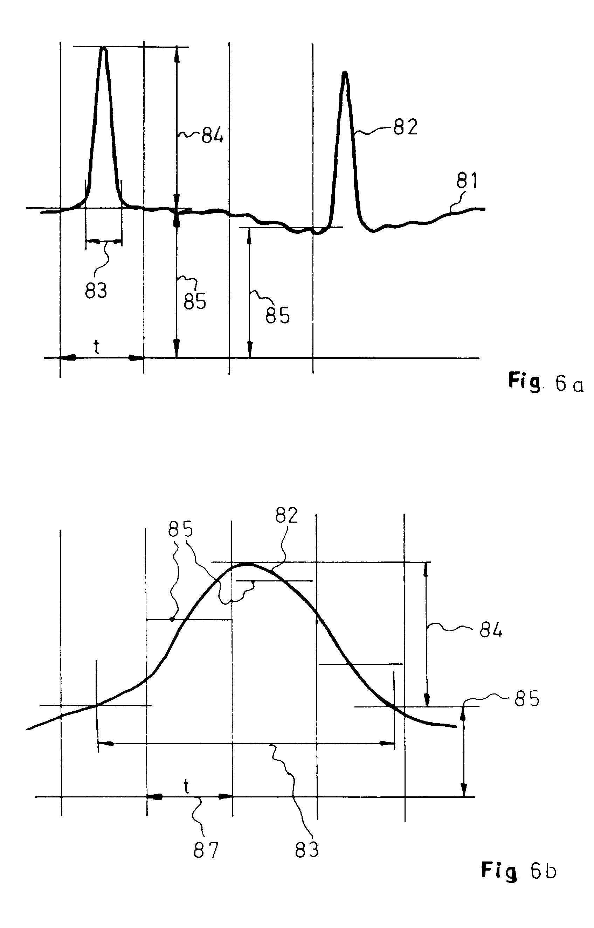

Die vorstehend beschriebene Auswerteelektronik arbeitet wie folgt:
Die Auswerteelektronik **21** unterscheidet LPD's und Haze aufgrund des zeitlichen Signalverlaufs (**Fig. 6a**, **6b**). Während Hazesignale **81** einen relativ langsam ändernden Signalverlauf aufweisen, zeichnen sich LPD's durch kurze Pulse **82** aus. Das Tiefpassfilter **75** lässt die niederfrequenten Signale der Hazevariationen passieren, während die Pulse der LPD's unterdrückt werden. Die Amplitude der Pulse **82** ist proportional zur Grösse des LPD's. Die Pulsbreite **83** solcher Pulse hängt bei LPD's die klein gegen den Beleuchtungsspot **12** sind, von der Spotbreite und von der Geschwindigkeit ab, mit der sich die LPD's gegenüber dem Beleuchtungsspot **12** bewegen. Führt das Substrat, dessen Oberfläche untersucht werden soll eine konstante Rotationsbewegung aus, so ändert sich die Geschwindigkeit der Oberfläche gegenüber dem Beleuchtungsspot **12** mit dem Radius. Die Geschwindigkeit ist am äusseren Rand des Substrates **11** am grössten und wird im Rotationszentrum des Substrates Null. Pulse der LPD's werden gegen das Substratzentrum breiter (**Fig. 6b**), was bedeutet, dass ohne besondere Vorkehrungen, LPD's die wegen ihres Signalverlaufs am Rand des Substrates als solche erkannt würden, im Zentrum als Hazevariation klassifiziert würden, oder, Hazevariationen könnten im Innern der Substratflächen richtig als solche erkannt werden, wogegen am Substratrand gleiche Hazevariationen als LPD's gemessen würden. Obiges würde zu unzulässigen Messfehlern führen. Diese Fehler werden durch das einstellbare Tiefpassfilter **75** behoben. Die Filterkonstante wird dabei in Abhängigkeit von der radialen Position und von der Rotationsgeschwindigkeit gesetzt. Das Tiefpassfilter **75** weist am Substratrand eine kleine, im Substratzentrum eine grosse Zeitkonstante auf. Bei schnellen Rotationsgeschwindigkeiten ist dessen Zeitkonstante klein bei langsamen gross. Die Anpassung der Filterkonstante wird einmal bei der Vorgabe der Rotationsgeschwindigkeit und anschliessend während der Messung durch Umschaltung oder durch kontinuierliche Veränderung der Filterkonstante vorgenommen. Das Ziel dabei ist, ein konstantes Verhältnis zwischen Filterkonstante und relativer Substratgeschwindigkeit zu erreichen. Die Filteranpassung geschieht dabei über den Brandbreitenvorgabeeingang **76a**.

Da die Amplitude von LPD Signalen um Grössenordnungen grösser sind als die Amplitude von Hazesignalen, ist ein gewisses Uebersprechen von Pulsen im Hazekanal unvermeidbar. Ein solches Uebersprechen führt zu einer Verfälschung der Hazewerte und - wie später erläutert - zu einer Verfälschung der eigentlichen Pulsamplitude. Die Peakunterdrückung wird mit der Diode **721** realisiert. Diese Diode **721** schliesst einen durch einen Puls bedingten Spannungsanstieg über den Filterkondensatoren **722** nach dessen Abfall in den Ausgang des weiteren Verstärkers **723** kurz. Somit werden grosse Spannungsabweichungen zwischen dem Ausgang des weiteren Verstärkers **723** und dem Hazefilterausgang **77** unterdrückt. Das Hazesignal am Hazefilterausgang **77** wird mittels des Analog-Digitalwandlers **78** digitalisiert. Da die Hazevariationen in der Praxis äusserst gering sind, kleiner als 1% der Signalamplitude, muss der Analog-Digitalwandler **78** hochauflösend sein.

Am Ausgang **79b** des Partikelkanals liegen die Signale von LPD's und Linedefects an. Die Grösse eines solchen Defekts wird über die Amplitude ermittelt, wobei diese Amplitude der reinen Pulsamplitude **84** - d.h. abzüglich der Hazeamplitude **85** - entspricht. Besonders bei kleinen LPD's ist die Hazeamplitude **85** oft grösser als die Pulsamplitude **84**. Darum ist es wichtig, dass vom Eingangssignal der exakte Hazewert subtrahiert wird, bevor der Wert der Amplitude des LPD's weiterverarbeitet wird. Der exakte Wert der Hazeamplitude liegt, wie oben beschrieben, am Ausgang **77** des Hazefilters an. Durch Subtraktion des Signals am Eingang **70** und des Signals am Ausgang **77** mittels des als Subtrahierschaltung **73** verwendeten dritten Verstärkers **726** entsteht somit das LPD-Signal.

Die Anforderungen an den Peakdetektor **74** sind in dem System extrem hoch. Gleichzeitig werden hohe Linearität, niederes Rauschen, Schnelligkeit und extrem kurze Rückstellzeiten verlangt. Um all diesen Anforderungen gerecht zu werden, wird ein digitaler Peakdetektor eingesetzt. Diese Bauteile besitzen einen analogen Eingang und einen digitalen Ausgang **79b** an dem direkt der digitalisierte Maximalwert der Signal-Spannung am Eingang anliegt.

Ob ein Messwert ein Haze oder ein LPD-Wert ist, wird aufgrund der Peakhöhe **84** entschieden. Hierzu vergleicht die Auswertelektronik den Peakwert mit einem Referenzwert. Liegt der Peakwert über dem Referenzwert, ist der Messwert ein LPD-Wert und wird mittels eines Flags markiert.

An den Ausgängen der Auswerteelektronik **79a, 79b** liegen die Messdaten digitalisiert als Haze- und als LPD-Daten vor. Die Werte dieser Messdaten werden in rascher Folge von der Recheneinheit **22** ausgelesen und abgespeichert. Es liegen somit zwei Datensätze vor: ein Hazedaten- und ein LPD-Datensatz.

Neben den eigentlichen Messwertdaten, werden die zum Messwert gehörenden Positionsdaten erfasst. Aus den Messwert- und den dazugehörenden Positionsdaten kann der jeweilige Streulichtwert von jedem Ort auf dem Substrat ermittelt und wiedergegeben werden.

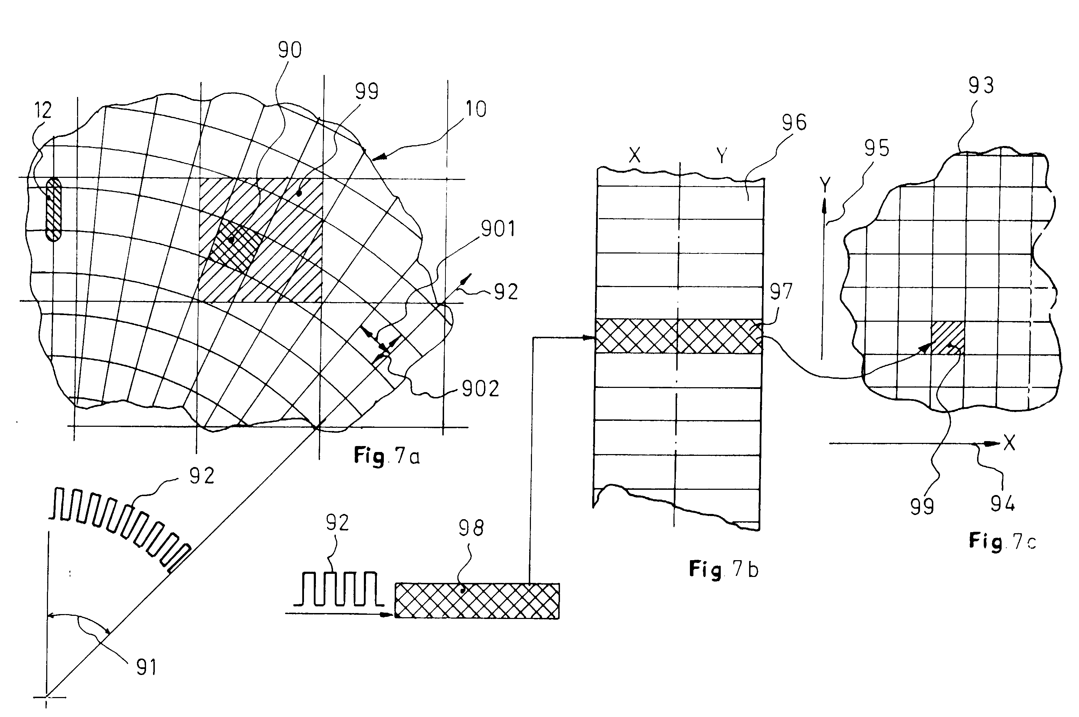

Im folgenden wird anhand der **Fig. 1**, und **7a** bis **7d** die Ermittlung der Positionsdaten beschrieben:
Zur Positionserfassung werden elektronische Pulse **92** verwendet. Die elektronischen Pulse **92** werden wahlweise von dem Rotationsimpulsgeber **29** (Rotationspulse **92a**) oder von dem Impulsgenerator **29a** (Indexpulse **92b**) generiert. Der Rotationsimpulsgeber **29** kann zum Beispiel ein optischer Encoder der mit der Achse des Rotationsmotors **27** gekoppelt ist, sein. Der Impulsgenerator **29a** kann beispielsweise ein elektronischer Rechteckoszillator sein. Der Impulsgenerator **29a** liefert vorzugsweise Pulse einer konstanten Frequenz. Diese Indexpulse **92b** sind mit den Rotationspulsen **92a** synchronisiert somit wiederum mit der Rotationsbewegung der Auflagefläche **13** gekoppelt.

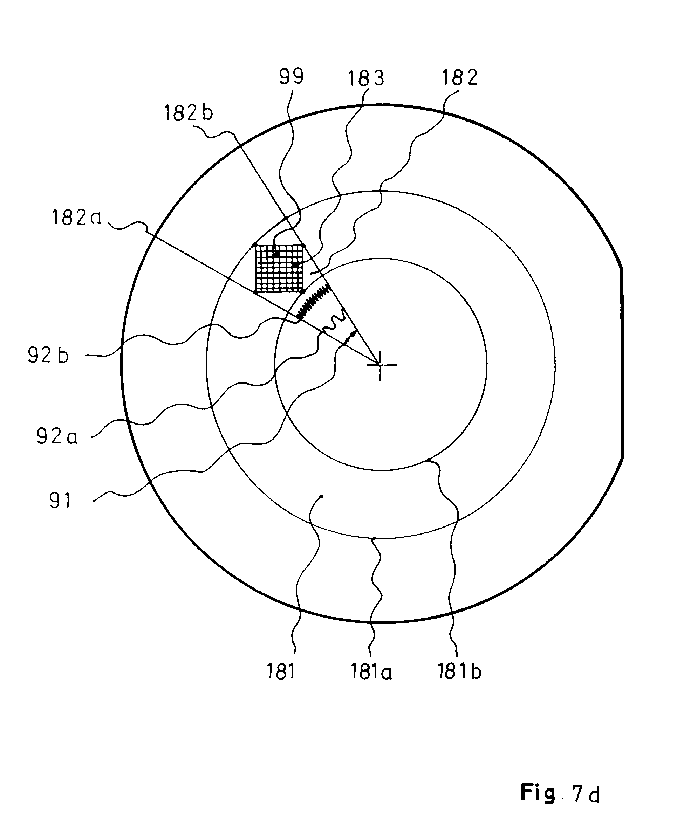

Die Messwerte werden während der Messung in vorgegebenen Zeitabständen eingelesen und digitalisiert. Der Auslöser für das Einlesen der Messwerte sind die elektronischen Pulse **92** deren Phase mit der Rotationsbewegung der Auflagefläche **13** gekoppelt sind. Für mittlere örtliche Auflösungen werden die Pulse direkt vom Rotationsimpulsgeber **29** genommen. Für hohe örtliche Auflösungsanforderungen werden die Pulse des Impulsgenerators **29a** verwendet. Hierbei werden die Rotationsimpulse **92a** bei einer ersten Abtastung der gesamten Oberfläche mit relativ grossem Vorschub unter Benutzung des zigarrenförmigen ersten Zwischenbildes **33** erzeugt. Bei einer zweiten, ausschnittsweisen Abtastung mit kleinem Vorschub unter Benutzung des zweiten Zwischenbildes **32**, werden die Indeximpulse **92b** angewendet, wobei die Anzahl Indexpulse **92b** grösser als die Anzahl Rotationspulse **92a** ist (**Fig. 7d**).

Die maximale Frequenz des Impulsgenerators **29a** ergibt sich aus der maximalen Geschwindigkeit mit der die Daten aufgenommen werden können. Diese maximale Geschwindigkeit ist in der Praxis durch den Rauschpegel, der bekanntlich mit zunehmender Bandbreite ebenfalls zunimmt, limitiert.

Während die Impulse **92a** und **92b** des Rotationsimpulsgeber **29** bzw. des Impulsgenerator **29a** eine Winkelinformation **91** darstellen, liefert der Translationsimpulsgeber **30** eine radiale Positionsinformation (**Fig. 7a**, **7b**) zu einem Messwert. Der Translationsimpulsgeber **30** kann als linearer Inkrementalgeber oder, im Falle einer Spindel als Linearantrieb, ein Encoder sein der mit der Achse des Translationsmotors **28** gekoppelt ist. Das Interface **26** regelt die Geschwindigkeiten des Rotationsmotors **27** und des Translationsmotors **28** so, dass der Beleuchtungsspot **12** eine gleichmässige Spirale auf der Oberfläche **10** zurücklegt.

Der Rotationsimpulsgeber **29** und der Translationsimpulsgeber **30** liefern die Position eines Messwertes somit in Polarkoordinaten. Das Messergebnis soll aber auf einem Computerbildschirm **24** oder einem Computerdrucker **25** dargestellt werden oder in einem Massenspeicher **23** abgespeichert werden können. Das gesamte Messergebnis setzt sich aus einer Pixelfläche **93** (**Fig. 7c**) bestehend aus einer ersten Anzahl Pixel **99** in der einen Richtung **94** (**x**) und einer zweiten Anzahl Pixel **99** in der anderen Richtung **95** (**y**) zusammen. Jedes Pixel **99** repräsentiert wiederum ein bestimmtes Flächenteil **90** der Substratoberfläche **10**. Für diese Darstellung und die softwaremässige Verarbeitung der Daten, müssen die Polarkoordinaten in kartesische Positionsdaten umgewandelt werden.

Während bei der ganzflächigen Messung die gesamte Oberfläche spiralförmig abgefahren wird, wird bei der ausschnittweisen Messung mit erhöhter Ortsauflösung lediglich ein ringförmiger Bereich **181** der Oberfläche abgefahren (**Fig. 7d**). Der ringförmige Bereich wird dabei vom äusseren Ende **181a** bis zum inneren Ende **181b** abgefahren. Die eigentliche Messwertaufnahme ist allerdings nur in einem Ringsegment **182** aktiv. Das Ringsegment **182** reicht jeweils von Ringsegmentanfang **182a** bis zum Ringsegmentende **182b**. Die Länge des Ringsegmentes -d.h. die Distanz zwischen Ringsegmentanfang **182a** und Ringsegmentende **182b-** sowie die Breite des Ringsegmentes -d.h. die Distanz zwischen äusserem Ende **181a** und innerem Ende **181b** des ringförmigen Bereiches **181** wird jeweils so gross gewählt, dass der zu messende Bereich **183** der Oberfläche **10** gerade innerhalb des Ringsegmentes liegt.

Da weiters die Anzahl der aufgenommenen Messwerte gross und die Messzeit klein sein muss, werden die Messwerte in sehr rascher Folge eingelesen. Dies bedingt ein äusserst rasches Koordinatentransformationsverfahren. Die Koordinatentransformation über die trigonometrische Umrechnung eines jeden Positionswertes wäre zu zeitaufwendig. Ein entsprechend schnelles Verfahren ist notwendig. Die verwendete Umwandlung nutzt daher eine Liste **96** zur Koordinatentransformation. Diese Liste **96** muss für eine bestimmte Substratgrösse nur einmal berechnet und gespeichert werden. In der Liste ist eine Sequenz von Speicheradressen **97** abgelegt. Jede Speicheradresse zeigt auf einen Speicherplatz, der wiederum ein Pixel **99** repräsentiert. Ein Pixel **99** kann dabei mehrere jedoch stets mehr als einen Eintrag in der Liste haben.

Ein Zeiger **98** zeigt auf die aktuelle Speicheradresse **97** in der Liste. Diese aktuelle Speicheradresse enthält die Adresse desjenigen Pixels **99**, dessen Ort dem Ort (**90**, **Fig. 7a**) des Beleuchtungsspots **12** auf der Substratoberfläche **10** entspricht. Der Wert des Zeigers **98** wird beim Eintreffen eines jeden Rotationspulses **92a**, bzw. bei der ausschnittsweisen Messnung beim Eintreffen eines Indexpulses **92b**, um Eins erhöht. Dadurch zeigt der Zeiger während einer Messung sequentiell genau einmal auf jede Speicheradresse **97** in der Liste. Die Speicheradressen der Liste sind zuvor so mittels Koordinatentransformation berechnet, dass sie in dieser Reihenfolge stets das dem Ort des Beleuchtungsspot **12** entsprechende Pixel adressieren.

Die Anzahl Indexpulse **92b**, die während dem Durchlaufen des Ringsegmentes eintreffen, ist durch die Auflösung der Darstellung des Messresultates (z.B. des Bildschirms) bestimmt. Diese Anzahl kann durch Verändern der Frequenz des Impulsgenerators **29a** oder durch Anpassung der Rotationsgeschwindigkeit des Rotationsmotors **27** angepasst werden.

Zwischen zwei Einlesezyklen von Messwerten überstreicht der Beleuchtungsspot **12** das Flächenteil **90.** Die Grösse dieses Flächenteiles bildet sich aus dem Weg **901** den der Beleuchtungsspot **12** während diesem Einlesezyklus in Rotationsrichtung **94 (x)** zurücklegt und dem Vorschub **902** des Substrates während einer Umdrehung. Diese Grösse des Flächenteiles **90** ist kleiner als die auf die Substratoberfläche **10** projizierte Fläche eines Pixels **99**. Somit wird während einer Messung jedes Pixel mehr als einmal adressiert (Ueberlappung). Die Ueberlappung ist am Substratrand kleiner als im Substratzentrum und wird für die Auswertung wie folgt berücksichtigt.

Alle Messwerte, die als Hazewerte von der Auswerteelektronik ausgehen, werden innerhalb eines Pixels summiert. Zugleich wird die Anzahl der pro Pixel aufsummierten Messwerte für jedes Pixel gespeichert. Nach Abschluss der Messwerteaufnahmen werden für jedes Pixel die Messwertesummen durch die Anzahl der abgelegten Messwerte dividiert (Mittelwertbildung). Die Hazewerte werden dadurch, nach der elektronischen Mittelung mittels des Hazefilters, ein zweites Mal gemittelt. Partikel oder LPD-Werte werden im Gegensatz zu Hazewerten maximiert. Dabei wird jeder LPD-Wert vor der Abspeicherung mit dem LPD-Wert der sich bereits in dem entsprechenden Pixel befindet verglichen. Ist der neue LPD-Wert grösser als der bereits gespeicherte, so wird dieser mit dem neuen überschrieben, ist der neue LPD-Wert kleiner als der gespeicherte, so wird der neue Wert verworfen. Zusätzlich zur elektronischen Peakwertbildung werden somit die LPD-Werte ein zweites Mal maximiert.

Die Messwertaufnahme bei der ausschnittsweisen Messung der Oberfläche wird durch den am nächsten vor dem Ringsegmentanfang **182a** liegenden Rotationsimpuls gestartet. Mittels der Rotationsimpulse **92** kann ebenfalls die Drehzahl des Rotationsmotors so justiert werden, dass die gewünschte Anzahl Indexpulse **92b** innerhalb eines Durchlaufs des Beleuchtungsspots **12** über das Ringsegment **182**. Die nicht dargestellten Messwerte -d.h. Messwerte die innerhalb des Ringsegmentes **182** liegen aber nicht innerhalb des zu messenden Bereichs **183**- werden aus der Berechnung der Look-up Table erkannt und verworfen. Gültige Messwerte die innerhalb des zu messenden Bereiches **183** liegen werden auf bekannte Weise abgespeichert und weiterverarbeitet.

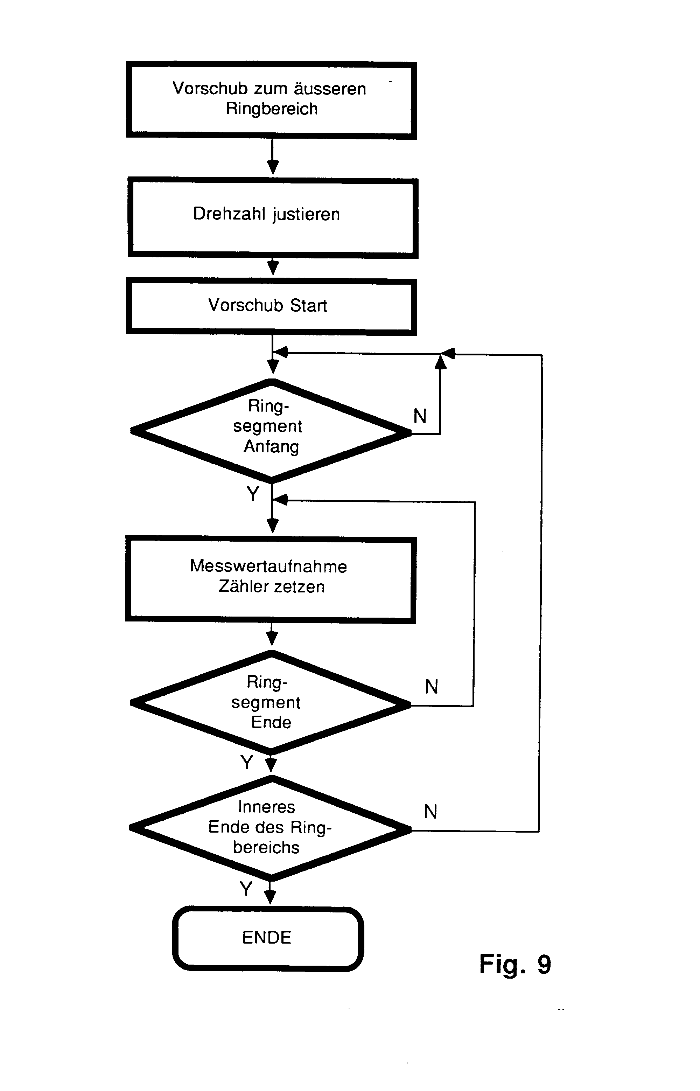

**Fig. 9** verdeutlicht diesen Messvorgang. Zunächst wird der Beleuchtungsspot **12** zum äusseren Ende **181a** des zu messenden ringförmigen Bereichs **181** gefahren. Mittels der Index- und Rotationspulse wird die Drehzahl gemessen und auf die gewünschte Drehzahl justiert. Bei Erreichen des Beleuchtungsspots **12** des Ringsegmentanfangs **182a** wird bei jedem Indexpuls ein Messwert eingelesen und in oben beschriebener Weise abgespeichert. Ein Zähler zählt die Indexpulse bzw. die Einzelmessungen und vergleicht deren Anzahl mit zuvor aus der Grösse des zu messenden Ausschnitts berechneten Anzahl. Ist diese Anzahl erreicht, so ist das Ende des Ringsegments erreicht. Mittels der Loop-up Table wird überprüft ob deren Ende und somit die radiale Position des inneren Endes des ringförmigen Bereichs **181b** erreicht ist. Wenn nein, dann wird die Messwertaufnahme bis zum erneuten Erreichen des Ringsegmentanfangs **182a** gestoppt, von wo die Messwertaufnahme wie oben wieder gestartet wird. Ist das innere Ende des ringförmigen Bereichs erreicht, so ist die Messung abgeschlossen.

Bei der Messdatenaufnahme muss die Anzahl der Umdrehungen während der gesamten Messung auf die Grösse des zu messenden Bereichs abgestimmt sein. Diese Anzahl ist das Mass für den Vorschub zwischen zwei Umdrehungen und wird ebenfalls vor Beginn der Messung aus der Grösse des zu messenden Bereichs, der Grösse des Beleuchtungsspots **12** und der Auflösung des Messresultates berechnet. Eingestellt wird der Vorschub zwischen zwei Umdrehungen mit der Drehgeschwindigkeit des Translationsmotors **28**.

Nach Abschluss der Messwerteaufnahmen liegen zwei Messwertefelder vor. Ein Messwertefeld enthält die Haze-Messwerte, ein weiteres die LPD-Messwerte. Diese Messwertefelder können nun dargestellt, gedruckt oder gespeichert werden.

Die Darstellung der Messwerte erfolgt als farbkodierte 2-dimensionale Graphik, wobei zwischen Hazegraphik und LPD-Graphik gewählt werden kann. Die Farbkodierung **44** weist einem bestimmten Streulichtamplitudenbereich eine Farbe zu. Da der Dynamikbereich der Messwerte grösser ist als die Anzahl der zur Verfügung stehenden Farben und da insbesondere Hazeinhomogenitäten äusserst klein gegen den Dynamikbereich hin sein können, ist der wirklich dargestellte Ausschnitt des Dynamikbereichs wählbar. Die Auswählbarkeit des dargestellten Ausschnitts ist auch dann sinnvoll, wenn LPD's von lediglich einer bestimmten Grösse betrachtet werden sollen. Die untere Limite **40** und obere Limite **41** des dargestellten Dynamikbereiches ist dabei einfach -per Knopfdruck- verschiebbar. Zur Orientierung wird der dargestellte Bereich als verschiebbare Marke **43** in einem Fenster angezeigt (ähnlich Scrollbar).

Die Farbskala **44** für Hazegraphiken ist so gewählt, dass hohe Streulichtamplituden hellen, rot-gelben, niedrige Streulichtamplituden dunklen, blau-grauen Farbtönen entsprechen. Das Hazebild entsteht somit auf schwarzem Hintergrund. Pixel, dessen Messwert über der oberen Limite des dargestellten Dynamikbereichs liegen, werden weiss dargestellt.

Die Farbskala für LPD-Graphiken ist die invertierte der Farbskala für Hazegraphiken. Das LPD-Bild steht somit auf weissem Hintergrund. LPD's, die über der oberen Limite des dargestellten Dynamikbereichs liegen, werden unterdrückt, bzw. wiederum weiss dargestellt. Wie bei der Hazedarstellung wird auch hier der dargestellte Dynamikbereich zur Orientierung als verschiebbare Marke in einem Fenster angedeutet.

Zusätzlich zu der Farbkodierung werden zu den Farbskalen, die zu einer Farbe gehörenden Messwerte numerisch angezeigt. Die Einheit für LPD's ist dabei umLSE (Micron Latex Sphere Equivalent). 1 umLSE ist dabei die von einer 1um grossen Latexkugel verursachte Streulichtamplitude.

Die umLSE-Werte werden vor der Darstellung aus einer Tabelle mit Stützwerten durch Interpolation errechnet. Die Stützwerte in der Tabelle werden durch messen eines Substrates mit Latexkugeln bekannter Grösse ermittelt. Die Stützwerte brauchen pro System lediglich einmal geeicht werden.

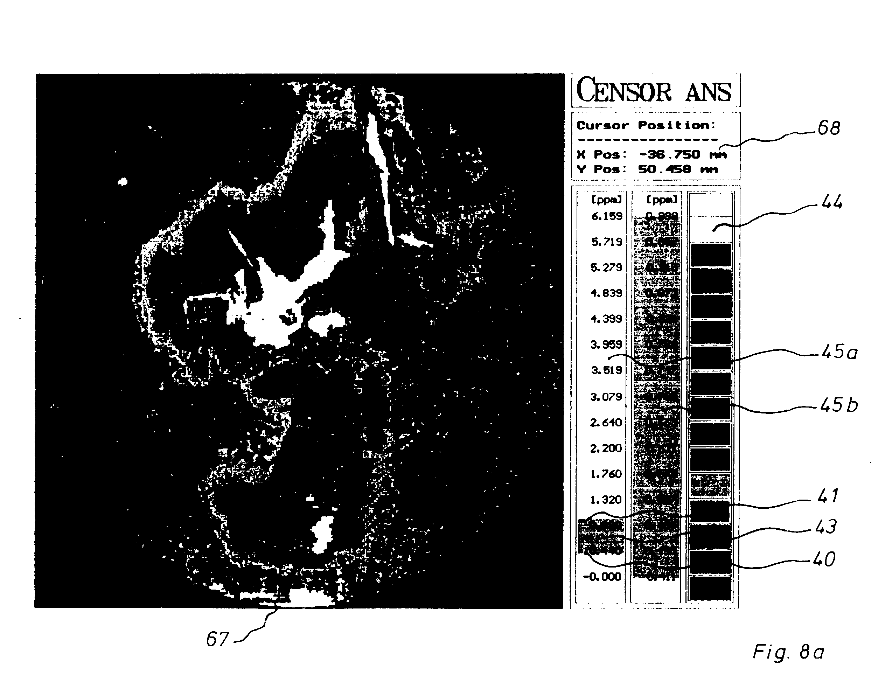

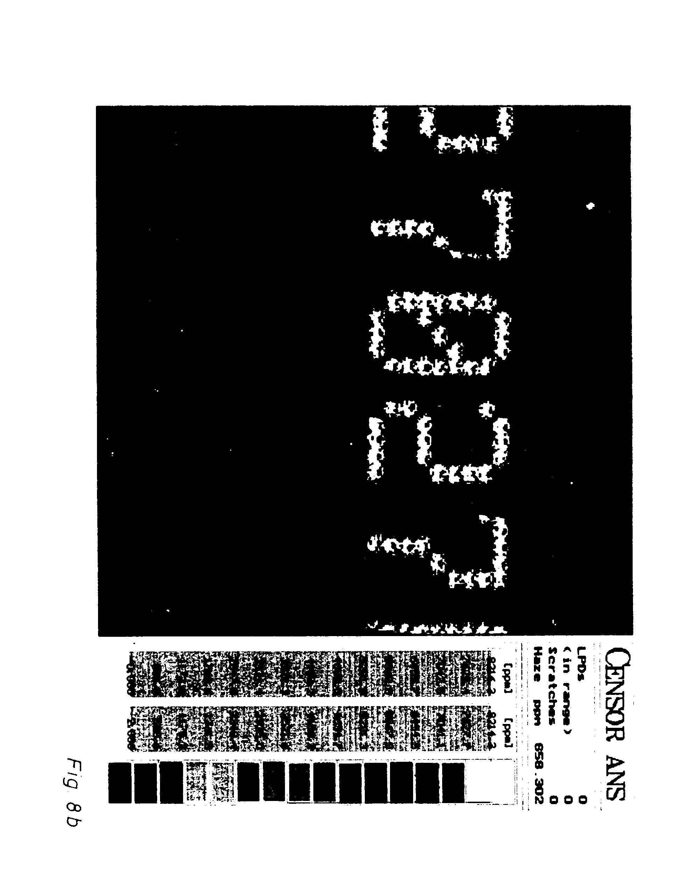

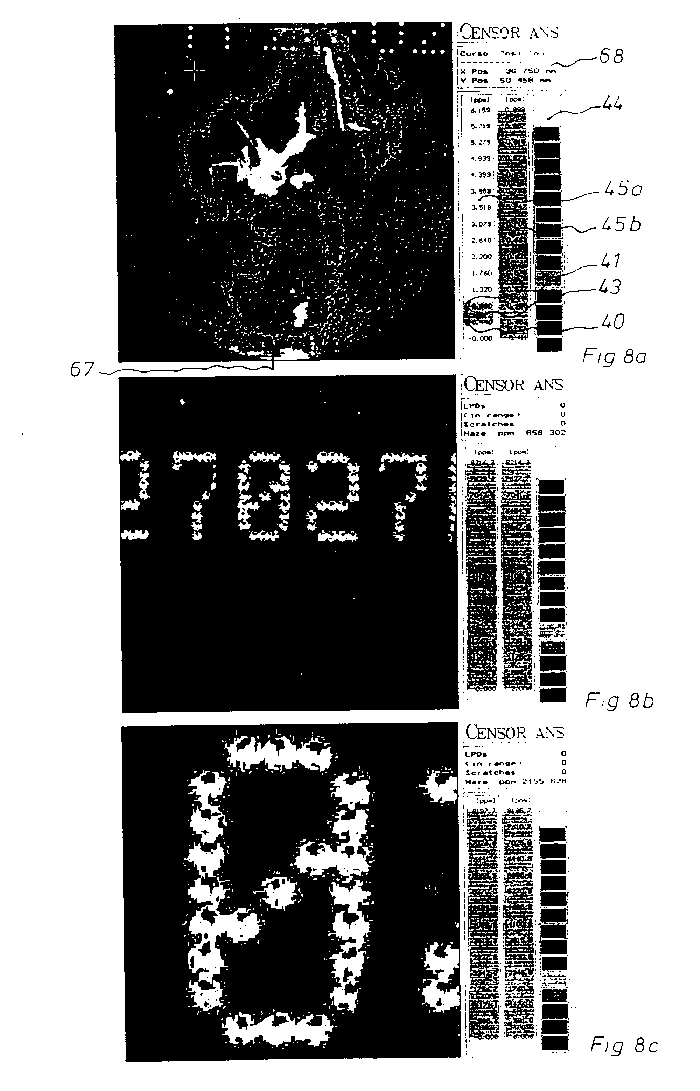

Die Graphik der ganzflächigen Messung weist ferner ein Fadenkreuz **67** auf das mittels Cursortasten verschoben werden kann (siehe **Fig. 8a**). In einem Feld **68** werden die Koordinaten des Zentrums des Fadenkreuzes **67** angegeben. Diese Ortsangaben dienen der Bestimmung des Ortes einer ausschnittweisen Messung oder der Ortsangabe eines Defektes die für das rasche und eindeutige Auffinden desselben Ortes beipielsweise in einem Mikroskop notwendig ist.

**Fig. 8b** zeigt die ausschnittweise Darstellung des zuvor mittels des Fadenkreuzes **67** ausgewählten Bereichs der Oberfläche. Die Abbildung zeigt die Laserbeschriftung eines Wafers.

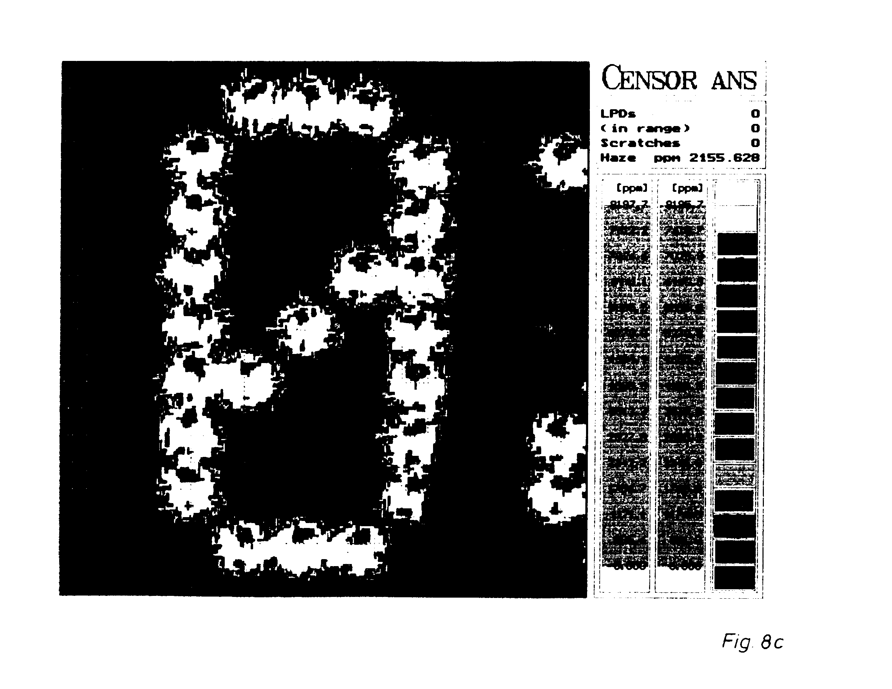

**Fig. 8c** zeigt eine weiter vergrösserte Darstellung des zuvor mittels des Fadenkreuzes **67** ausgewählten Bereichs der Oberfläche.

Ergänzt wird die 2-dimensionale graphische Darstellung der Oberfläche durch ein Histogramm. Im Histogramm werden Grösse der Defekte gegen Anzahl, bzw. Streulichtamplitude gegen Anzahl, aufgetragen. Das Histogramm liefert Informationen über die statistische Verteilung der verschiedenen Defektgrössen.

Die zu messenden Substratoberflächen können sehr unterschiedlich sein. In der Praxis kann deren Streuvermögen um mehrere Zehnerpotenzen variieren. Diese Variation übersteigt den Dynamikbereich der Messanordnung. In Fällen, wo der zu erwartende Haze- oder LPD-Grössenbereich nicht vorhersehrbar ist, ist eine Anordnung zur automatischen Einstellung der Messempfindlichkeit unumgänglich (Prescale). Ziel des Prescales ist es, die Messempfindlichkeit für jedes Substrat automatisch so einzustellen, dass die Messwerte stets in einen auflösbaren Bereich fallen.

In dem beschriebenen System wird dieses Ziel dadurch erreicht, dass vor Beginn der eigentlichen Messdatenaufnahme, das Substrat soweit verfahren wird, bis der Beleuchtungsspot beim Rotieren des Substrates nicht mehr die Randzone des Substrates trifft, Während das Substrat rotiert, wird die Messempfindlichkeit, beginnend mit der geringsten Messempfindlichkeit, schrittweise erhöht. Die

Messwerte werden bei jedem Schritt während einer bestimmten Periode - z.B.während einer Umdrehung - aufgenommen und anschliessend gemittelt. Liegt der entstandene Mittelwert unter dem vorgegebenen Wert, wird die Messempfindlichkeit erhöht und erneut eine gemittelte Messung durchgeführt. Dieser Vorgang wird solange wiederholt, bis die gemittelten Messwerte dem vorgegebenen Wert entsprechen. Ist der vorgegebene Wert erreicht, wird die eigentliche Messung gestartet.

Nachdem die Messdaten aufgenommen und verarbeitet vorliegen, ist die automatische Wahl des dargestellten Bereiches für die einfache Bedienung notwendig (Autoscale). Diese Wahl des dargestellten Haze-Bereiches wird durch automatisches setzen der unteren und der oberen Limite **40**, **41** vollzogen. Die untere und obere Limite wird dabei aus den Hazedaten errechnet. Durch Mittelwertbildung und Streuwertbildung der Messwerte werden die untere und obere Limite durch Verschiebung und Skalierung so gesetzt, dass ein bestimmter Anteil der Messwerte in den dargestellten Bereich **43** fallen. Bei günstiger Wahl dieses Anteils führt dieses Verfahren zu stets aussagekräftigen Darstellungen des Hazeverlaufs auf dem Substrat.

Mit dem Prescale ist es somit möglich, einfach und zeitsparend Substrate von sehr unterschiedlicher Qualität zu untersuchen. Das Prescale sorgt dafür, dass die Messungen stets in einem sinnvollen Empfindlichkeitsbereich durchgeführt werden und somit einerseits rauschfrei und andererseits nicht übersteuert sind. Das Autoscale sorgt für die überschaubare Darstellung der Messdaten. Prescale und Autoscale erhöhen den Bedienungskomfort des Systems und steigern dessen Automatisierungsgrad.

Bei Systemen der hier beschriebenen Art ist schliesslich die bekannte und gleichbleibende Orientierung der Messresultate wichtig. Ist die Substratoberfläche **10** ohne die Randzonen gemessen worden, so ist die Orientierung der Messung aufgrund des Messausdruckes nicht mehr nachvollziehbar.

Wafer besitzen für deren Orientierung eine Markierung am Substratrand (Flat oder Notch). Mit dieser Orientierung kann der Wafer eindeutig orientiert werden. Da das hier beschriebene System während der Messung eine Rotations-bewegung ausführt, kann mit nur geringem Aufwand eine automatische Orientierungsvorrichtung realisiert werden. Diese Orientierungsvorrichtung soll die Orientierung des Substrates erkennen und es somit erlauben, die Messresultate in der gewünschten Orientierung darzustellen.

Am sinnvollsten wird die Erkennung der Substratorientierung vor der eigentlichen Messung durchgeführt. Ist die Orientierung bekannt, erscheint durch Starten der Messung an einem bestimmten, von der Lage der Orientierungsmarkierung abhängigen Winkel, das Messresultat stets in der gewünschten Orientierung.

Das hier beschriebene System nutzt zum Erkennen der Orientierung des Substrates das Signal, das beim Ueberschreiten des Beleuchtungsspots **12** über den Substratrand erzeugt wird. Bei der Beleuchtung des Substratrandes entstehen sehr hohe Streulichtamplituden, die von dem System erkannt werden.

Zur Orientierung des Substrates wird somit das Substrat soweit verfahren, dass der Beleuchtungsspot nicht mehr auf das Substrat trifft. Während das Substrat rotiert, wird dieses soweit verfahren, bis der Beleuchtungsspot **12** die Substratfläche nicht mehr verlässt. Somit wird die gesamte Randzone abgefahren. Dabei erzeugt die Orientierungsmarke bzw. die Orientierungsmarken des Substrates (Flat oder Notch) ein Signal, dessen Breite mit kleiner werdendem Radius abnimmt. Da die Dimensionen der Orientierungsmarken, die Rotationsgeschwindigkeit und der Verfahrweg pro Umdrehung bekannt sind, kann aus der Signalbreite sowie aus dessen Abnahme pro Umdrehung, die Orientierungsmarke eindeutig erkannt und dessen Lage aus den obigen Daten errechnet werden.

Zur Verbesserung der Signalqualität die durch die Orientierungsmarken erzeugt werden, ist die lichtempfindliche Vorrichtung **35** unterhalb der Substratauflage so angebracht, dass deren Lage bezüglich dem Substrat fix ist. Die lichtempfindliche Fläche dieser lichtempfindlichen Vorrichtung liegt bei der Messung der Randzone des Substrates annähernd in der optischen Achse der Abbildungsoptik. Der Beleuchtungsspot trifft somit beim Messen der Randzone des Substrats durch die Orientierungsmarken auf lichtempfindliche Fläche. Substratrand und Orientierungsmarken modulieren somit das auf die lichtempfindliche Fläche treffende Licht des Beleuchtungsstrahls.

Um bei verschiedenen Substratdurchmessern funktionstüchtig zu sein, muss die lichtempfindliche Fläche eine parallel zur Translationsbewegung längliche Form aufweisen, oder muss aus mehreren, für jeden Substratdurchmesser abgestimmten, Einzelelementen bestehen.

Die von der lichtempfindlichen Vorrichtung erzeugten Signale, werden in elektronische Signale umgewandelt und der oben beschriebenen Elektronik zugeführt, wo sie auf besagte Weise weiter verarbeitet werden.

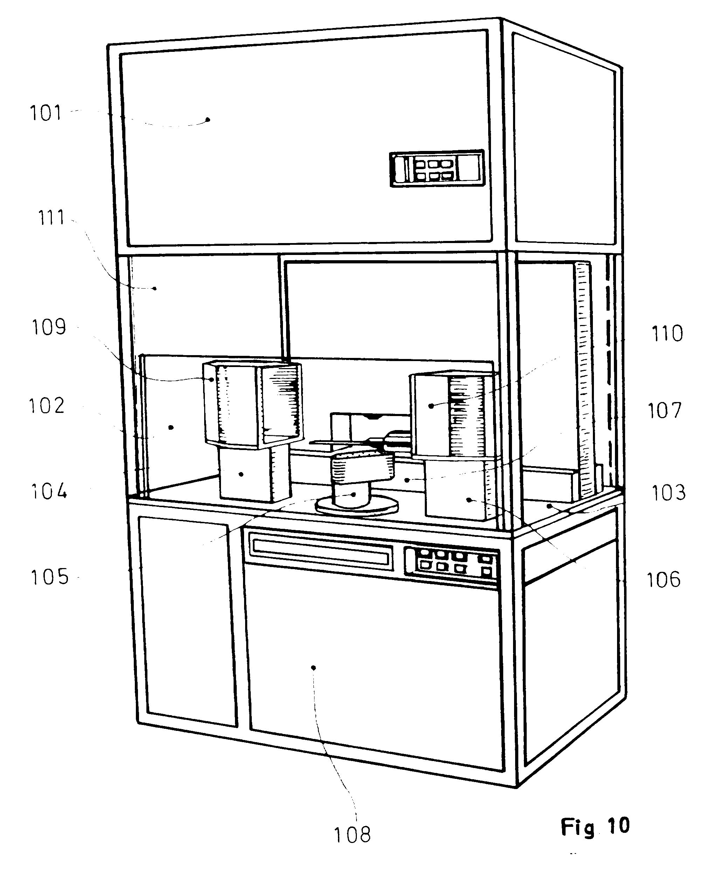

In der **Fig. 10** ist mit **109** eine erste Waferkassette und mit **110** eine zweite Waferkassette bezeichnet. Zwischen den Waferkassetten **109, 110** ist ein Handling-Roboter **105** angeordnet. Eine mit **107** bezeichnete Messstation besteht im wesentlichen aus der vorstehend anhand der **Fig. 1** beschriebenen Einrichtung. Die Waferkassetten **109, 110,** der Handling-Roboter **105** und die Messstation **107** sind in einem Messraum **102** untergebracht. Oberhalb des Messraumes **102** ist eine Flow-Box **101** angeordnet, welche den gesamten Messraum **102** mit Reinstluft versorgt, um jegliche Kontamination der empfindlichen Oberflächen der Wafer zu vermeiden.

Die Messung läuft im übrigen vollkommen automatisch ab. Hierbei wird ein Wafer mittels des Handling-Roboters **105** aus der ersten Waferkassette **109** entnommen und in die Messstation **107** gebracht, wo der eigentliche Messvorgang durchgeführt wird. Nach der Messung wird der Wafer je nach Messresultat wieder in der ersten Waferkassette oder aber in der zweiten Waferkassette **110** abgelegt.

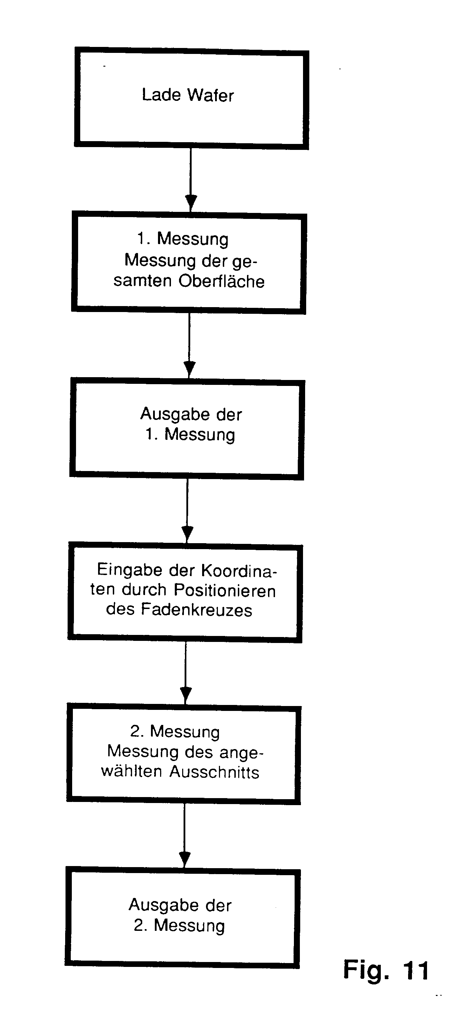

**Fig. 11** verdeutlicht den typischen Messvorgang. In einer ersten Messung wird die gesamte Oberfläche gemessen und dargestellt. Mittels eines auf dem Bildschirm bewegbaren Fadenkreuzes kann Position und Grösse des genauer zu inspizierenden Ausschittes der Oberfläche eingegeben werden. In einem zweiten Schritt wird der ausgewählte Ausschnitt gemessen und dargestellt.

## Patentansprüche

1. Einrichtung für Oberflächeninspektionen, mit einer einen Beleuchtungsstrahl (**1**) erzeugenden Lichtquelle (**2**), mit einem Objektiv (**9**) und mit einer Auflagescheibe (**13**), auf der ein zu kontrollierendes bzw. zu inspizierendes Objekt (**11**) angeordnet ist, wobei der Beleuchtungsstrahl (**1**) durch das Objektiv (**9**) senkrecht auf eine zu inspizierende Oberfläche (**10**) des Objektes (**11**) gerichtet ist und die Auflagescheibe (**13**) auf einem Antrieb befestigt ist, der eine aus einer Rotation und einer Translation zusammengesetzte Bewegung ausführt, so dass die Oberfläche (**10**) des Objektes (**11**) mittels des Beleuchtungsstrahles (**1**) spiralförmig abtastbar ist, und wobei ein Photodetektor (**19**) vorgesehen ist, auf welchen das von der Oberfläche (**10**) des Objektes (**11**) abgestrahlte, im Objektiv (**9**) gesammelte Licht gerichtet ist, und dessen Ausgang mit einem Verstärker (20) in Verbindung steht,
**dadurch gekennzeichnet**,
- dass im Strahlengang zwischen Lichtquelle (**2**) und Objektiv (**9**) ein in verschiedene Stellungen steuerbares Linsensystem (**5**) angeordnet ist,
- dass das Linsensystem (**5**) je nach Stellung verschiedene Zwischenbilder (**31**) erzeugt, wobei bei einer ersten Abtastung der Oberfläche (**10**) des Objektes (**11**) ein erstes Zwischenbild (**33**) und bei einer zweiten Abtastung ein zweites Zwischenbild (**32**) verwendet wird, und wobei der Vorschub bei der Abtastung dem jeweils verwendeten Zwischenbild (**33, 32**) anpassbar ist,
- dass im Strahlengang zwischen dem Linsensystem (**5**) und dem Objektiv (**9**) eine Dunkelfeldstop-Baugruppe (**18**) angeordnet ist, die eine einstellbare Dunkelfeldumlenkung (**8**) aufweist, wobei der Beleuchtungsstrahl (**1**) nach der Umlenkung exakt zentrisch und im rechten Winkel durch das Objektiv (**9**) auf das Objekt (**11**) gerichtet ist,
- dass der Verstärker (**20**) mit einer Auswerteelektronik (**21**) verbunden ist, die mit einer Recheneinheit (**22**) in Verbindung steht, und die das vom Verstärker (**20**) erzeugte Ausgangssignal in Messwerte zerlegt, die von punktförmigen, linienförmigen und flächenförmigen Defekten der Oberfläche (**10**) des kontrollierten Objektes (**11**) herrühren,
- dass eine Anordnung zur Ermittlung der jeweiligen momentanen Abtastposition vorgesehen ist, wobei die Abtastpositionen den zum jeweils gleichen Zeitpunkt auftretenden Messwerten zugeordnet sind, und
- dass mit der Recheneinheit (**22**) verbundene Peripheriegeräte (**23, 24, 25**) vorgesehen sind, mittels welchen die Gesamtheit aller Messwerte einer Messung dargestellt bzw. speicherbar ist.

2. Einrichtung nach Patentanspruch **1**,
**dadurch gekennzeichnet**,
dass das Linsensystem (5) zwei gegeneinander justierbare Linsen (**51, 52**) aufweist, wobei die erste Linse (**51**) eine Zylinderlinse und die zweite Linse (**52**) eine spärische Linse ist und beide Linsen eine gemeinsame Brennweite aufweisen, und wobei das von der ersten Linse (**51**) erzeugte erste Zwischenbild (**33**) zigarrenförmig, und das von der zweiten Linse (**52**) erzeugte zweite Zwischenbild (**32**) punktförmig ist.

3. Einrichtung nach Patentanspruch **2**,
**dadurch gekennzeichnet,**
dass die erste Linse (**51**) derart im Beleuchtungsstrahl (**1**) angeordnet ist, dass das auf der Oberfläche (**10**) des Objektes (**11**) projizierte zigarrenförmige erste Zwischenbild (**33**) seine längere Ausdehnung bezüglich der Rotation der Auflagescheibe (**13**) in radialer, seine kürzere Ausdehnung in tangentialer Richtung aufweist, sodass bei der ersten Abtastung ein grösserer Vorschub zwischen zwei sich folgenden Umdrehungen gewählt werden kann, als bei der zweiten Abtastung unter Verwendung des punktförmigen zweiten Zwischenbildes (**32**).

4. Einrichtung nach Patentanspruch **3**,
**dadurch gekennzeichnet,**
dass bei der ersten Abtastung die gesamte Oberfläche (**10**) des Objektes (**11**), und bei der zweiten Abtastung nur bestimmte Ausschnitte der Oberfläche (**10**) des Objektes (**11**) abgetastet werden.

5. Einrichtung nach Patentanspruch **2**,
**dadurch gekennzeichnet,**
dass die Linsen (**51, 52**) auf einer L-förmigen Trägerplatte (**58**) angeordnet sind, die auf einer senkrecht zum Beleuchtungsstrahl (**1**) verlaufenden Achse (**56**) schwenkbar gelagert ist, wobei der Schwenkwinkel (**57**) gleich dem Winkel zwischen den Schenkeln der L-förmigen Trägerplatte (**58**) ist und die Endpositionen durch Anschläge (**54.1**, **55.1**) definiert sind.

6. Einrichtung nach Patentanspruch **2**,
**dadurch gekennzeichnet**,
dass die Linsen (**51, 52**) auf einem Schlitten (**53**) angeordnet und abwechselnd linear in den Beleuchtungsstrahl (**1**) bringbar sind, wobei die jeweilige Stellung bestimmende, justierbare Anschläge (**54, 55**) vorgesehen sind.

7. Einrichtung nach Patentanspruch **2**,
**dadurch gekennzeichnet**,
dass die Linsen (**51, 52**) auf einer Scheibe (**59**) angeordnet sind), die drehbar auf einer parallel zum Beleuchtungsstrahl (**1**) verlaufenden Achse (**56.1**) gelagert ist, wobei die Linsen (**51, 52**) durch Drehung der Scheibe (**59**) um einen bestimmten Winkel (**57.1**) abwechselnd in den Beleuchtungsstrahl (**1**) bringbar sind.

8. Einrichtung nach Patentanspruch **1**,
**dadurch gekennzeichnet,**
dass die Dunkelfeldstop-Baugruppe (**18**) einen Dunkelfeldstop (**61**) aufweist, der direkt in eine Dunkelfeldstop-Trägerplatte (**62**) integriert ist, welche an einer Haltevorrichtung (**64**) zwecks Strahl justierung drehbar gelagert ist.

9. Einrichtung nach Patentanspruch **8**,
**dadurch gekennzeichnet**,
- dass der Dunkelfeldstop (**61**) durch eine Schicht reflektierenden Materials, das im Zentrum der Dunkelfeldstop-Trägerplatte (**62**) angeordnet ist, gebildet ist,
- dass die Form der Fläche des reflektierenden Materials derart ist, dass die Projektion der Dunkelfeldstop-Baugruppe (**18**) entlang der optischen Achse (**34**) kreissymmetrisch ist, und
- dass die Dunkelfeldstop-Trägerplatte (**62**) aus einem Material besteht, das für die Wellenlängen des Beleuchtungslichtes transmittierend ist.

10. Einrichtung nach Patentanspruch **9**,
**dadurch gekennzeichnet,**
dass bei einem Neigungswinkel (**63**) der Dunkelfeldstop-Trägerplatte (**62**) von grösser als 0 , die Form der Fläche des reflektierenden Materials elliptisch ist.

11. Einrichtung nach Patentanspruch **1**,
**dadurch gekennzeichnet,**
dass die Dunkelfeldstop-Baugruppe (**18**) einen Dunkelfeldstop (**61**) in Form eines Prismas (**65**) aufweist, das in einem Prismenhalter (**66**) befestigt ist, wobei der Prismenhalter (**66**) zylinderförmig ist, so dass seine Projektion entlang der optischen Achse (**34**) der Abbildungsoptik kreissymmetrisch ist, und dass der Prismenhalter (**66**) an einer justierbar gelagerten Dunkelfeldstop-Trägerplatte (**62.1**) befestigt ist, und eine erste Oeffnung (**67**) für den Lichteintritt und eine zweite Oeffnung (**68**) für den Lichtaustritt aufweist.

12. Einrichtung nach Patentanspruch **1**,
**dadurch gekennzeichnet,**
dass die Dunkelfeldstop-Baugruppe (**18**) einen Dunkelfeldstop (**61**) in Form eines abgeschrägten, zylindrischen Körpers (**69**) aufweist, wobei die abgeschrägte Fläche verspiegelt ist und der zylindrische Körper (**69**) an einer justierbar gelagerten Dunkelfeldstop-Trägerplatte (**62.2**) befestigt ist.

13. Einrichtung nach Patentanspruch **1**,
**dadurch gekennzeichnet**,
dass eine Abschattungsvorrichtung (**60**) in Form eines in seiner Längsrichtung verschiebbaren Stabes vorgesehen ist, mittels welcher eine Asymmetrie in die Abbildung eingebracht werden kann.

14. Einrichtung nach Patentanspruch **1**,
**dadurch gekennzeichnet**,
- dass die Auswerteelektronik (**21**) einen Signaleingang (**70**) aufweist, der mit dem Ausgang des Verstärkers (**20**) und mit einem, aus einem Hazefilter (**71**) und einer Peakunterdrükkung (**72**) bestehenden Hazekanal verbunden ist,
- dass der Signaleingang (**70**) mit einem Partikelkanal verbunden ist, der aus einer Subtrahierschaltung (**73**) und einem Peakdetektor (**74**) besteht, der einen digitalen Ausgang (**79b**) aufweist,
- dass ein Hazefilterausgang (**77**) mit dem Eingang eines Analog-Digitalwandlers (**78**) in Verbindung steht, der einen Ausgang (**79a**) aufweist,
- dass das Hazefilter (**71**) mit einem Bandbreitevorgabe-Eingang (**76a**) und der Peakdetektor (**74**) mit einem weiteren Eingang (**76b**) der Auswerteelektronik (**21**) verbunden ist,
- wobei am Ausgang (**79a**) des Analog-Digitalwandlers (**78**) die von Flächendefekten (Haze) herrührenden, und am Ausgang (**79b**) des Peakdetektors (**74**) die von punktförmigen Defekten (LPD's) und linienförmigen Defekten herrührenden Messwerte auftreten, welche von der Recheneinheit (**22**) eingelesen und abgespeichert werden.

15. Einrichtung nach Patentanspruch **14**,
**dadurch gekennzeichnet**,
- dass der Hazekanal (**71, 72**) ein Tiefpassfilter (**75**) aufweist, das aus Filterkondensatoren (**722**), Widerständen (**724**) und einer ersten und zweiten Schalteinrichtung (**725a 725b**) besteht,
- dass die Widerstände (**724**) an den einen Enden über die erste und die zweite Schaltungseinrichtung (**725a, 725b**) mit den Filterkondensatoren (**722**) und dem Hazefilterausgang (**77**) verbunden sind,
- dass der Hazefilterausgang (**77**) über eine als Peakunterdrückung (**72**) dienende Diode (**721**) mit den anderen Enden der Widerstände (**724**) und dem Ausgang eines weiteren Verstärkers (**723**) in Verbindung steht,
- dass der Eingang des weiteren Verstärkers (**723**) mit dem Signaleingang (**70**) und mit dem nicht-invertierenden Eingang eines weiteren, als Subtrahierschaltung (**73**) dienenden dritten Verstärkers (**726**) verbunden ist,
- dass der invertierende Eingang des dritten Verstärkers (**726**) am Hazefilterausgang (**77**) angeschlossen ist, während sein Ausgang mit dem Eingang des Peakdetektors (**74**) in Ver bindung steht,
- dass die Schalteinrichtungen (**725a, 725b**) zum Zwecke der Betätigung mit dem Bandbreitenvorgabe-Eingang (**76a**) verbun den sind,
- wobei mittels der Schalteinrichtungen (**725a, 725b**) in Abhängigkeit von der Rotationsgeschwindigkeit und der radialen Abtastposition vom Zentrum des zu kontrollierenden Objektes (**11**) ausgehend, die Zeitkonstante des Tiefpassfilters (**75**) durch Abschalten von Kondensatoren (**722**) und Widerständen (**724**) verkleinert wird.

16. Einrichtung nach Patentanspruch **1**,
**dadurch gekennzeichnet**,
- dass die Anordnung zur Ermittlung der Abtastpositionen einen mit der Achse eines Rotationsmotors (**27**) des Antriebes gekoppelten Rotationsimpulsgeber (**29**) und einen mit der Achse eines Translationsmotors (**28**) des Antriebs gekoppelten Translationsimpulsgeber (**30**) aufweist, die mit der Recheneinheit (**22**) verbunden sind,
- dass der Rotationsimpulsgeber (**29**) eine Winkelinformation und der Translationsimpulsgeber (**30**) eine Radialinformation erzeugt, so dass die Abtastpositionen durch Polarkoordinaten bestimmbar sind,
- dass eine Liste (**96**) vorgesehen ist, welche eine Anzahl Speicherplätze aufweist, die der Anzahl aller Impulse (**92**) des Rotationsimpulsgebers (**29**) einer Messung entspricht, wobei in den Speicherplätzen Adressen gespeichert sind, durch welche x/y-Koordinaten eines kartesischen Koordinatensystems bestimmbar sind,
- dass ein Zeiger (**98**) in Form eines Adressenregisters vorgesehen ist, das jeweils bei Eintreffen eines Impulses (**92**) des Rotationsimpulsgebers (**29**) weitergeschaltet wird, so dass der Zeiger (**98**) jeweils auf die aktuelle Adresse (**97**) der Liste (**96**) zeigt, und
- dass die jeweils aktuellen Adressen (**97**) Adressen von Pixeln (**99**) sind, aus welchen sich eine das gesamte Messergebnis darstellende Pixelfläche (**93**) zusammensetzt, wobei der Ort eines Pixels (**99**) auf der Pixelfläche (**93**) dem Ort des Beleuchtungsspots (**12**) auf der Oberfläche (**10**) entspricht.

17. Einrichtung nach den Patentansprüchen **14** und **16**,
**dadurch gekennzeichnet,**
dass die Messwerte jeweils beim Auftreten der Impulse (**92**) des Rotationsimpulsgebers (**29**) eingelesen werden, und dass eine programmierbare Frequenzteilerschaltung vorgesehen ist, mittels welcher die Anzahl Impulse pro Umdrehung in Abhängigkeit von der radialen Position gegen das Zentrum hin reduziert wird.

18. Einrichtung nach Patentanspruch **1**,
**dadurch gekennzeichnet,**
dass die Oberfläche (**10**) vom Zentrum ausgehend in Richtung Objektrand abgetastet wird.

19. Einrichtung nach Patentanspruch **16**,
**dadurch gekennzeichnet,**
dass ein Impulsgenerator (**29a**) vorgesehen ist, der Indeximpulse (**92b**) wählbarer Frequenz erzeugt und über die Recheneinheit (**22**) mit dem Rotationsimpulsgeber (**29**) verbunden ist, wobei die Indeximpulse (**92b**) mit Rotationsimpulsen (**92a**) des Rotationsimpulsgebers (**29**) synchronisiert sind und die Anzahl Indeximpulse (**92b**) pro Umdrehung in Abhängigkeit von der Drehzahl des Rotationsmotors (**27**) veränderbar ist.

20. Einrichtung nach Patentanspruch **19**,
**dadurch gekennzeichnet,**
dass der Impulsgenerator (**29a**) ein elektronischer Rechteckoszillator ist.

21. Einrichtung nach den Patentansprüchen **3** und **19**,
**dadurch gekennzeichnet,**
dass bei der ersten Abtastung der gesamten Oberfläche (**10**) die Rotationsimpulse (**92a**) verwendet werden.

22. Einrichtung nach Patentanspruch **4**,
**dadurch gekennzeichnet,**
dass der während der zweiten Abtastung zu vermessende bestimmte Ausschnitt der Oberfläche (**10**) einem Bereich (**183**) entspricht, der innerhalb eines Ringsegmentes (**182**) liegt.

23. Einrichtung nach Patentanspruch **22**,
**dadurch gekennzeichnet,**
dass die während der zweiten Abtastung erfassten Messwerte innerhalb eines Ringsegmentes (**182**), die nicht innerhalb des zu vermessenden Bereiches (**183**) liegen, aus der Berechnung einer Look-up-Table erkannt und/oder verworfen werden und die gültigen, innerhalb des Bereiches (**183**) liegenden Messwerte abgespeichert und weiterverarbeitet werden.

24. Einrichtung nach den Patentansprüchen **19** und **22**,
**dadurch gekennzeichnet,**
dass bei der zweiten, ausschnittsweisen Abtastung der Oberfläche (**10**) Indexpulse (**92b**) verwendet werden, wobei die Anzahl der Indexpulse (**92b**) grösser ist als die Anzahl der Rotationspulse (**92a**), und wobei die zweite Abtastung unter Benutzung des zweiten Zwischenbildes (**32**) mit kleinerem Vorschub als bei der ersten Abtastung durchgeführt wird.

25. Einrichtung nach Patentanspruch **16,**
**dadurch gekennzeichnet,**
dass die Darstellung der Messwerte als farbkodierte, zweidimensionale Graphik erfolgt, wobei zwischen einer Hazegraphik (**45**) und einer LPD-Graphik (**46**) gewählt werden kann.

26. Einrichtung nach Patentanspruch **25**,
**dadurch gekennzeichnet,**
dass bestimmten, den Messwerten entsprechenden Streulichtamplituden bestimmte Farben zugeordnet sind.

27. Einrichtung nach Patentanspruch **26**,
**dadurch gekennzeichnet,**
dass jeweils ein wählbarer Ausschnitt des Dynamikbereiches der Messwerte farbig dargestellt wird und die Zuordnung der Farben in diesem Ausschnitt wirksam ist.

28. Einrichtung nach Patentanspruch **25**,
**dadurch gekennzeichnet,**
dass die Farbskala für die LPD-Graphik der invertierten Farbskala der Hazegraphik entspricht.

29. Einrichtung nach Patentanspruch **25**,
**dadurch gekennzeichnet,**
dass die jeweils einer Farbe zugeordneten Messwerte zusätzlich numerisch anzeigbar sind.

30. Einrichtung nach Patentanspruch **1**,
**dadurch gekennzeichnet,**
dass die Grösse der Defekte einer Oberfläche (**10**) in Beziehung zur Anzahl mittels eines Histogramms darstellbar sind.

## Claims

1. A surface inspection apparatus comprising a light source (2) generating an illuminating beam (1), an objective (9) and a support disk (13) having arranged thereon an object (11) to be sampled or inspected, respectively, wherein said illuminating beam (1) is directed at a right angle and through said objective (9) onto a surface (10) to be inspected of said object (11), and said support disk (13) is mounted on a drive performing a movement composed of a rotation and a translation, such that the surface (10) of said object (11) can spirally be scanned by means of said illuminating beam (1), and wherein a photodetector (19) is provided onto which the light emitted from said surface (10) of said object (11) and collected in said objective (9) is directed and the output of which is connected to an amplifier (20),
characterized in that
- a lens system (5) which can be switched to different positions is arranged in the beam path between light source (2) and objective (9);
- said lens system (5) generates different intermediate images (31) depending on the position thereof, using a first intermediate image (33) in a first scanning of the surface (10) of said object (11) and a second intermediate image (32) in a second scanning, the feed for scanning being able to be adapted to the intermediate image (33, 32) respectively used;
- a dark-field stop subassembly (18) is arranged in the beam path between said lens system (5) and said objective (9), said dark-field stop subassembly (18) having an adjustable dark-field deflection element (8), wherein after deflection, said illuminating beam (1) is exactly directed centrally at a right angle and through said objective (9) onto said object (11);
- said amplifier (20) is connected to an evaluating electronic system (21) coupled to a computing unit (22) and analyzing the output signal of said amplifier (20) into measured values which stem from punctiform, linear and planar defects on said surface (10) of said sampled object (11);
- there is provided an assembly for detecting the respective actual scanning position, said scanning positions being associated to the measured values respectively appearing at the same moment; and
- there are provided peripherals (23, 24, 25) connected to said computing unit (22), by means of which peripherals (23, 24, 25) the totality of all the measured values of a measurement can be represented or stored, respectively.

2. The apparatus of claim 1, characterized in that said lens system (5) comprises two lenses (51, 52) adjustable in an opposed manner, said first lens (51) being a cylindrical lens and said second lens (52) being a spherical lens and both lenses having a common focal distance, and wherein the first intermediate image (33) generated by said first lens (51) is cigar-shaped and the second intermediate image (32) generated by said second lens (52) is punctiform.

3. The apparatus of claim 2, characterized in that said first lens (51) is arranged in said illuminating beam (1), such that said cigar-shaped first intermediate image (33) projected on the surface (10) of said object (11) has its larger extension in a radial direction relative to the rotation of said support disk (13) and its smaller extension in a tangential direction, such that in the first scanning, between two subsequent revolutions a feed may be selected which is larger than that in the second scanning employing said punctiform second intermediate image (32).

4. The apparatus of claim 3, characterized in that in the first scanning the entire surface (10) of said object (11) is scanned, and in the second scanning only assigned sections of the surface (10) of said object (11) are scanned.

5. The apparatus of claim 2, characterized in that said lenses (51, 52) are arranged on an L-shaped carrier plate (58) which is pivotally supported on an axis (56) extending in a normal direction in respect of said illuminating beam (1), the angle of traverse (57) corresponding to the angle between the sides of said L-shaped carrier plate (58) and the end positions thereof being defined by stops (54.1, 55.1).

6. The apparatus of claim 2, characterized in that said lenses (51, 52) are arranged on a carriage (53) and can alternately, linearly be brought in the illuminating beam (1), under the provision of adjustable stops (54, 55) determining their respective positions.

7. The apparatus of claim 2, characterized in that said lenses (51, 52) are arranged on a disk (59) which is pivoted on an axis (56.1) extending in parallel to said illuminating beam (1), said lenses (51, 52) being adapted to be alternately brought in the illuminating beam (1) by swivelling said disk (59) through a determined angle (57.1).

8. The apparatus of claim 1, characterized in that said dark-field stop subassembly (18) comprises a dark-field stop (61) which is directly integrated in a dark-field stop carrier plate (62) which is pivotally mounted at a holding device (64) for the purpose of beam adjustment.

9. The apparatus of claim 8, characterized in that
- said dark-field stop (61) is formed by a layer of reflecting material disposed in the center of said dark-field stop carrier plate (62),
- the shape of the surface of the reflecting material is such that the projection of said dark-field stop subassembly (18) along the optical axis (34) is circularly symmetrical, and
- said dark-field stop carrier plate (62) is made of a material which is transmitting for the wavelengths of the illuminating light.

10. The apparatus of claim 9, characterized in that the shape of the reflecting material is elliptic, when said dark-field stop carrier plate (62) is inclined in an angle of gradient (63) of more than 0.

11. The apparatus of claim 1, characterized in that said dark-field stop subassembly (18) includes a dark-field stop (61) in the form of a prism (65) secured in a prism clamp (66), said prism clamp (66) being cylindrical, such that its projection along the optical axis (34) of the imaging optics is circularly symmetrical, and that said prism clamp (66) is secured to an adjustably supported dark-field stop carrier plate (62.1) and includes a first aperture (67) for light entry and a second aperture (68) for the exit of light.

12. The apparatus of claim 1, characterized in that said dark-field stop subassembly (18) includes a dark-field stop (61) in the form of a beveled cylindrical body (69), with the beveled surface being metallized and said cylindrical body (69) being secured to an adjustably supported dark-field stop carrier plate (62.2).

13. The apparatus of claim 1, characterized in that a shading device (60) is provided in the form of a longitudinally movable bar, by means of which device an asymmetry can be put-in in the projection.

14. The apparatus of claim 1, characterized in that
- said evaluating electronic system (21) includes a signal input (70) which is connected to the output of said amplifier (20) and to a haze channel consisting of a haze filter (71) and a peak suppressor (72),
- said signal input (70) is connected to a particle channel consisting of a subtracter (73) and a peak detector (74) having a digital output (79b),
- a haze filter output (77) is connected to the input of an analog-to-digital converter (78) having an output (79a),
- said haze filter (71) is connected to a frequency-range control input (76a) and said peak detector (74) is connected to another input (76b) of said evaluating electronic system (21),
- wherein measured values stemming from planar defects (haze) appear at the output (79a) of said analog-to-digital converter (78), and measured values stemming from light point defects (LPD's) and linear defects appear at the output (79b) of said peak detector (74), which measured values are read and stored by said computing unit (22).

15. The apparatus of claim 14, characterized in that
- said haze channel (71, 72) includes a low-pass filter (75) consisting of filter capacitors (722), resistors (724), and first and second circuits (725a, 725b),
- said resistors (724), at one ends thereof, are connected to said filter capacitors (722) and said haze filter output (77) via said first and second circuits (725a, 725b),
- said haze filter output (77) is connected to the other ends of said resistors (724) and to the output of a further amplifier (723) via a diode (721) serving as a peak suppressor (72),
- the input of said further amplifier (723) is connected to said signal input (70) and to the non-inverting input of a further, third amplifier (726) serving as a subtracter (73),
- the inverting input of said third amplifier (726) is connected to said haze filter output (77), while its input is connected to the input of said peak detector (74),
- said circuits (725a, 725b) are connected to said frequency-range control input for the purpose of actuation thereof,
- the time constant of said low-pass filter (75) is reduced by disabling capacitors (722) and resistors (724) by means of said circuits (725a, 725b) as a function of the speed of rotation and the radial scanning position from the center of said object (11) to be controlled.

16. The apparatus of claim 1, characterized in that
- said assembly for detecting the scanning position includes a rotation pulse generator (29) coupled to the axis of a rotation motor (27) of the drive, and a linear pulse generator (30) coupled to the axis of a linear drive motor (28) of the drive, connected to said computing unit (22),
- said rotation pulse generator (29) generates an angle information and said linear pulse generator (30) generates a radial information, such that the scanning positions can be detected by polar coordinates,
- there is provided a register (96) comprising a number of memory locations corresponding to the number of the total of pulses (92) of said rotation pulse generator (29) during one measurement, said memory locations having stored addresses adapted to determine x/y-coordinates of a Cartesian coordinate system,
- there is provided a pointer (98) in the form of an address decoder being respectively stepped on upon receipt of a pulse (92) of said rotation pulse generator (29), such that said pointer (98) always points to the actual address (97) of said register (96), and
- said respective actual addresses (97) are addresses of pixels (99) being composed to form a pixel zone (93) representing the total result of measurement, wherein the location of any pixel (99) in said pixel zone (93) corresponds to the location of the illuminating spot (12) on said surface (10).

17. The apparatus of claims 14 and 16, characterized in that the measured values are respectively read upon appearance of said pulses (92) of said rotation pulse generator (29) and that there is provided a programmable frequency divider circuit, by means of which the number of pulses per revolution is reduced as a function of the radial position towards the center.

18. The apparatus of claim 1, characterized in that said surface (10) is scanned from the center towards the periphery of the object.

19. The object of claim 16, characterized in that there is provided a pulse generator (29a) which generates index pulses (92b) of a selectable frequency and is connected to said rotation pulse generator (29) via said computing unit (22), said index pulses (92b) being synchronized with rotation pulses (92a) of said rotation pulse generator (29) and the number of said index pulses (92b) per revolution being changeable as a function of the rotational speed of said rotation motor (27).

20. The apparatus of claim 19, characterized in that said pulse generator (29a) is an electronic square-wave oscillator.

21. The apparatus of claims 3 and 19, characterized in that in the first scanning of the entire surface (10), said rotation pulses (92a) are used.

22. The apparatus of claim 4, characterized in that the assigned section of the surface (10) to be measured during the second scanning corresponds to an area (183) located within a ring segment (182).

23. The apparatus of claim 22, characterized in that the measured values detected within a ring segment (182) during the second scanning and not lying within the area (183) to be measured are recognized from the computing of a look-up table and/or are rejected, and the valid, measured values lying within said area (183) are stored and processed further.

24. The apparatus of claims 19 and 22, characterized in that in the second sectional scanning of said surface (10), index pulses (92b) are used, the number of said index pulses (92b) being larger than the number of said rotation pulses (92a) and said second scanning being performed with a smaller feed than in the first scanning, by employing said second intermediate image (32).

25. The apparatus of claim 16, characterized in that the measured values are displayed by a colour-coded two-dimensional chart, offering the choice between a haze graphic (45) and an LPD graphic (46).

26. The apparatus of claim 25, characterized in that predetermined colours are assigned to determined scattering light amplitudes corresponding to the measured values.

27. The apparatus of claim 26, characterized in that a selectable section of the dynamic range of the measured values is respectively visualized by colours and that the assignment of the colours is effective in that section.

28. The apparatus of claim 25, characterized in that the colour scale for the LPD graphic corresponds to the inverted colour scale of the haze graphic.

29. The apparatus of claim 25, characterized in that the measured values respectively assigned to a colour can additionally be indicated numerically.

30. The apparatus of claim 1, characterized in that the size of the defects of a surface (10) can be represented in correlation to their number by means of a histogram.

## Revendications

1. Dispositif de contrôle de surfaces, comprenant une source de lumière (2) qui engendre un rayon d'éclairage (1), comprenant un objectif (9) et comprenant un disque d'appui (13) sur lequel est disposé un objet (11) qu'il s'agit de contrôler ou d'inspecter, respectivement, cependant que le rayon d'éclairage (1) est dirigé à travers l'objectif (9) sur une surface à contrôler (10) de l'objet (11) et perpendiculairement à celle-ci, et que le disque d'appui (13) est fixé sur un entraînement qui effectue un déplacement composé d'une rotation et d'une translation, de sorte que la surface (10) de l'objet (11) peut être explorée en forme de spirale au moyen du rayon d'éclairage (1), et cependant qu'il est prévu un détecteur photo-électrique (19) sur lequel est dirigée la lumière qui est rayonnée par la surface (10) de l'objet (11) et qui est concentrée dans l'objectif (9), sa sortie étant en liaison avec un amplificateur (20), caractérisé par le fait :
- qu'un système de lentilles (5) pouvant être commandé pour prendre diverses positions est disposé dans le trajet des rayons entre la source de lumière (2) et l'objectif (8),
- que le système de lentilles (5) engendre selon sa position des images intermédiaires différentes (31), cependant que l'on utilise une première image intermédiaire (33) lors d'une première exploration de la surface (10) de l'objet (11) et une deuxième image intermédiaire (32) lors d'une deuxième exploration, et cependant que l'avance lors de l'exploration peut être adaptée à l'image intermédiaire (33, 32) qui est utilisée à chaque fois,
- que dans le trajet des rayons entre le système de lentilles (5) et l'objectif (9) est disposé un bloc à arrêt à zone sombre (18) qui comporte une déviation réglable sur la zone sombre (8), cependant qu'après la déviation, le rayon d'éclairage (1) est dirigé sur l'objet (11) à travers l'objectif (9) à angle droit et d'une manière exactement centrée,
- que l'amplificateur (20) est relié à une électronique d'exploitation (21) qui est en liaison avec une unité de calcul (22) et qui décompose le signal de sortie engendré par l'amplificateur (20) en des valeurs de mesure provenant de défauts en forme de points, en forme de lignes et en forme de surfaces de la surface (10) de l'objet contrôlé (11),
- qu'il est prévu un dispositif pour la détermination de chaque position d'exploration instantanée, cependant que les positions d'exploration sont associées aux valeurs de mesure intervenant à l'instant qui est à chaque fois le même, et :
- qu'il est prévu des appareils périphériques (23, 24, 25) qui sont reliés à l'unité de calcul (22) et au moyen desquels l'ensemble de toutes les valeurs de mesure d'une mesure peut être représenté ou enregistré, respectivement.

2. Dispositif selon la revendication 1, caractérisé par le fait que le système de lentilles (5) présente deux lentilles (51, 52) qui peuvent être réglées l'une par rapport à l'autre, cependant que la première lentille (51) est une lentille cylindrique et que la deuxième lentille (52) est une lentille sphérique, les deux lentilles présentant une distance focale commune, et cependant que la première image intermédiaire (33) engendrée par la première lentille (51) est en forme de cigare, et que la deuxième image intermédiaire (32) engendrée par la deuxième lentille (52) est en forme de point.

3. Dispositif selon la revendication 2, caractérisé par le fait que la première lentille (51) est disposée dans le rayon d'éclairage (1) d'une manière telle que la première image intermédiaire en forme de cigare (33) qui est projetée sur la surface (10) de l'objet (11) présente sa plus grande étendue par rapport à la rotation du disque d'appui (13) dans sa direction radiale et sa plus faible étendue dans la direction tangentielle, de sorte que l'on peut choisir lors de la première exploration une avance entre deux révolutions consécutives qui est supérieure à celle de la deuxième exploration utilisant la deuxième image intermédiaire en forme de point (32).

4. Dispositif selon la revendication 3, caractérisé par le fait que l'on explore la totalité de la surface (10) de l'objet (11) lors de la première exploration et seulement des parties déterminées de la surface (10) de l'objet (11) lors de la deuxième exploration.

5. Dispositif selon la revendication 2, caractérisé par le fait que les lentilles (51, 52) sont disposées sur une plaque porteuse en forme de L (58), celle-ci étant montée pivotante sur un axe (56) qui s'étend perpendiculairement au rayon d'éclairage (1), cependant que l'angle de pivotement (57) est égal à l'angle compris entre les ailes de la plaque porteuse en forme de L (58), et que les positions finales sont définies par des butées (54.1, 55.1).

6. Dispositif selon la revendication 2, caractérisé par le fait que les lentilles (51, 52) sont disposées sur un chariot (53), et qu'elles peuvent être amenées alternativement dans le rayon d'éclairage (1) par un déplacement linéaire, cependant qu'il est prévu des butées réglables (54, 55) qui déterminent la position correspondante.

7. Dispositif selon la revendication 2, caractérisé par le fait que les lentilles (51, 52) sont disposées sur un disque (59) qui est monté tournant sur un axe (56.1), celui-ci s'étendant parallèlement au rayon d'éclairage (1), cependant que les lentilles (51, 52) peuvent être amenées alternativement dans le rayon d'éclairage (1) grâce à une rotation du disque (59) d'un angle déterminé (57.1).

8. Dispositif selon la revendication 1, caractérisé par le fait que le bloc à arrêt à zone sombre (18) comporte un arrêt à zone sombre (61) qui est intégré directement à une plaque porteuse de l'arrêt à zone sombre (62), celle-ci étant montée tournante sur un dispositif formant support (64) en vue du réglage du rayon.

9. Dispositif selon la revendication 8, caractérisé par le fait :
- que l'arrêt à zone sombre (61) est constitué par une couche de matière réfléchissante qui est disposée au centre de la plaque porteuse de l'arrêt à zone sombre (62),
- que la forme de la surface de la matière réfléchissante est telle que la projection du bloc à arrêt à zone sombre (18) selon l'axe optique (34) soit symétrique de révolution, et :
- que la plaque porteuse de l'arrêt à zone sombre (62) est constituée par une matière qui transmet la lumière pour les longueurs d'onde de la lumière d'éclairage.

10. Dispositif selon la revendication 9, caractérisé par le fait que la forme de la surface de la matière réfléchissante est elliptique dans le cas d'un angle d'inclinaison (63) de la plaque porteuse de l'arrêt à zone sombre (62) qui est supérieur à 0.

11. Dispositif selon la revendication 1, caractérisé par le fait que le bloc à arrêt à zone sombre (18) présente un arrêt à zone sombre (61) sous la forme d'un prisme (65) qui est fixé dans un porte-prisme (66), cependant que le porte-prisme (66) est en forme de cylindre, de sorte que sa projection selon l'axe optique (34) de l'optique de formation de l'image est symétrique de révolution, et par le fait que le porte-prisme (66) est fixé à une plaque porteuse de l'arrêt à zone sombre (62.1) qui est montée en pouvant être réglée, et qu'il présente une première ouverture (67) pour l'entrée de la lumière et une deuxième ouverture (68) pour la sortie de la lumière.

12. Dispositif selon la revendication 1, caractérisé par le fait que le bloc à arrêt à zone sombre (18) présente un arrêt à zone sombre (61) sous la forme d'un corps cylindrique biseauté (69), cependant que la surface biseautée est revêtue d'une couche réfléchissante, et que le corps cylindrique (69) est fixé à une plaque porteuse de l'arrêt à zone sombre (62.2) qui est montée en pouvant être réglée.

13. Dispositif selon la revendication 1, caractérisé par le fait qu'il est prévu un dispositif d'obscurcissement (60) sous la forme d'une tige qui peut être déplacée dans sa direction longitudinale et au moyen de laquelle une asymétrie peut être introduite dans l'image formée.

14. Dispositif selon la revendication 1, caractérisé par le fait :
- que l'électronique d'exploitation (21) présente une entrée des signaux (70) qui est reliée à la sortie de l'amplificateur (20) et à un canal à défauts en forme de surfaces constitué par un filtre à défauts en forme de surfaces (71) et par un dispositif de suppression des pointes (72),
- que l'entrée des signaux (70) est reliée à un canal à particules constitué par un circuit soustractif (73) et par un détecteur de pointes (74) qui comporte une sortie numérique (79b),
- qu'une sortie (77) du filtre à défauts en forme de surfaces est reliée à l'entrée d'un convertisseur analogique-numérique (78) qui présente une sortie (79a),
- que le filtre à défauts en forme de surfaces (71) est relié à une entrée de prédétermination de la largeur de bande (76a), et que le détecteur de pointes (74) est relié à une autre entrée (76b) de l'électronique d'exploitation (21),
- cependant que l'on obtient à la sortie (79a) du convertisseur analogique-numérique (78) les valeurs de mesure provenant de défauts en forme de surfaces, et à la sortie (79b) du détecteur de pointes (74) celles provenant de défauts en forme de points et en forme de lignes, ces valeurs étant lues et enregistrées par l'unité de calcul (22).

15. Dispositif selon la revendication 14, caractérisé par le fait :
- que le canal à défauts en forme de surfaces (71, 72) comporte un filtre passe-bas (75) qui est constitué par des condensateurs de filtrage (722), des résistances (724) et un premier et un deuxième dispositifs de commutation (725a, 725b),
- que les résistances (724) sont reliées, à l'une de leurs extrémités et par l'intermédiaire des premier et deuxième dispositifs de commutation (725a, 725b), aux condensateurs de filtrage (722) et à la sortie (77) du filtre à défauts en forme de surfaces,
- que la sortie (77) du filtre à défauts en forme de surfaces est reliée, par l'intermédiaire d'une diode (721) qui sert de dispositif de suppression des pointes (72), aux autres extrémités des résistances (724) et à la sortie d'un autre amplificateur (723),
- que l'entrée de l'autre amplificateur (723) est reliée à l'entrée des signaux (70) et à l'entrée non inversante d'un troisième amplificateur (726) qui sert de circuit soustractif (73),
- que l'entrée inversante du troisième amplificateur (726) est raccordée à la sortie (77) du filtre à défauts en forme de surfaces, tandis que sa sortie est en liaison avec l'entrée du détecteur de pointes (74),
- que les dispositifs de commutation (725a, 725b) sont reliés à l'entrée de prédétermination de la largeur de bande (76a) en vue de l'actionnement,
- cependant que la constante de temps du filtre passe-bas (75) est diminuée par mise hors circuit des condensateurs (722) et des résistances (724) au moyen des dispositifs de commutation (725a, 725b), en fonction de la vitesse de rotation et en partant de la position d'exploration dans le sens radial par rapport au centre de l'objet à contrôler (11).

16. Dispositif selon la revendication 1, caractérisé par le fait :
- que le dispositif destiné à déterminer les positions d'exploration comprend un émetteur d'impulsions de rotation (29) qui est couplé à l'axe d'un moteur de rotation (27) de l'entraînement et un émetteur d'impulsions de translation (30) qui est couplé à l'axe d'un moteur de translation (28) de l'entraînement, ces émetteurs étant reliés à l'unité de calcul (22),
- que l'émetteur d'impulsions de rotation (29) engendre une information angulaire et que l'émetteur d'impulsions de translation (30) engendre une information radiale, de sorte que les positions d'exploration peuvent être déterminées en coordonnées polaires,
- qu'il est prévu une liste (96) comportant une pluralité de places de mémoire qui correspond au nombre de toutes les impulsions (92) de l'émetteur d'impulsions de rotation (29) d'une mesure, cependant que sont enregistrées dans les places de mémoire des adresses au moyen desquelles on peut déterminer les coordonnées en x et en y d'un système de coordonnées cartésiennes,
- qu'il est prévu un indicateur (98) sous la forme d'un registre d'adresses qui continue à être commuté lors de l'arrivée d'une impulsion (92) de l'émetteur d'impulsions de rotation (29), de sorte que l'indicateur (98) indique à chaque fois l'adresse actuelle (97) de la liste (96), et :
- que les adresses qui sont à chaque fois actuelles (97) sont des adresses de pixels (99) à partir desquels est composée la surface de pixels (93) qui représente la totalité du résultat des mesures, cependant que l'endroit d'un pixel (99) sur la surface de pixels (93) correspond à l'endroit de la tache de lumière (12) sur la surface (10).

17. Dispositif selon les revendications 14 et 16, caractérisé par le fait que les valeurs de mesure sont lues à chaque fois lors de l'apparition des impulsions (92) de l'émetteur d'impulsions de rotation (29), et par le fait qu'il est prévu un circuit diviseur de fréquence programmable au moyen duquel le nombre des impulsions par révolution est réduit en fonction de la position dans le sens radial par rapport au centre.

18. Dispositif selon la revendication 1, caractérisé par le fait que la surface (10) est explorée dans la direction du bord de l'objet en partant du centre.

19. Dispositif selon la revendication 16, caractérisé par le fait qu'il est prévu un générateur d'impulsions (29a), celui-ci engendrant des impulsions de repérage (92b) dont la fréquence peut être choisie et étant relié à l'émetteur d'impulsions de rotation (29) par l'intermédiaire de l'unité de calcul (22), cependant que les impulsions de repérage (92b) sont synchronisées avec des impulsions de rotation (92a) de l'émetteur d'impulsions de rotation (29), et que le nombre des impulsions de repérage (92b) par révolution peut être modifié en fonction de la vitesse de rotation du moteur de rotation (27).

20. Dispositif selon la revendication 19, caractérisé par le fait que le générateur d'impulsions (29a) est un oscillateur électronique à ondes rectangulaires.

21. Dispositif selon les revendications 3 et 19, caractérisé par le fait que ce sont les impulsions de rotation (92) qui sont utilisées lors de la première exploration de la totalité de la surface (10).

22. Dispositif selon la revendication 4, caractérisé par le fait que la partie déterminée de la surface (10) qui doit être contrôlée pendant la deuxième exploration correspond à une zone (183) qui est située à l'intérieur d'une partie de secteur circulaire (182).

23. Dispositif selon la revendication 22, caractérisé par le fait que les valeurs de mesure qui sont déterminées pendant la deuxième exploration à l'intérieur d'une partie de secteur circulaire (182) et qui ne sont pas situées à l'intérieur de la zone à contrôler (183) sont reconnues et/ou rejetées à partir du calcul d'une table à consulter, et que les valeurs de mesure valables situées à l'intérieur de la zone (183) sont enregistrées et continuent à être traitées.

24. Dispositif selon les revendications 19 et 22, caractérisé par le fait que l'on utilise des impulsions de repérage (92b) lors de la deuxième exploration de la surface (10) qui a lieu par parties, cependant que le nombre des impulsions de repérage (92b) est supérieur au nombre des impulsions de rotation (92a), et cependant que la deuxième exploration est réalisée en utilisant la deuxième image intermédiaire (32) avec une avance inférieure à celle de la première exploration.

25. Dispositif selon la revendication 16, caractérisé par le fait que la représentation des valeurs de mesure a lieu sous la forme d'un graphique à deux dimensions à codage par des couleurs, cependant que l'on peut choisir entre un graphique des défauts en forme de surfaces (45) et un graphique des défauts en forme de points (46).

26. Dispositif selon la revendication 25, caractérisé par le fait que des couleurs déterminées sont associées à des amplitudes de la lumière dispersée qui sont déterminées et qui correspondent aux valeurs de mesure.

27. Dispositif selon la revendication 26, caractérisé par le fait qu'une partie de la zone dynamique des valeurs de mesure que l'on peut choisir est représentée à chaque fois en couleurs, et que l'association des couleurs est active dans cette partie.

28. Dispositif selon la revendication 25, caractérisé par le fait que l'échelle des couleurs destinée au graphique des défauts en forme de points correspond à l'inverse de l'échelle des couleurs du graphique des défauts en forme de surfaces.

29. Dispositif selon la revendication 25, caractérisé par le fait que les valeurs de mesure qui sont associées à chaque fois à une couleur peuvent être affichées en supplément par voie numérique.

30. Dispositif selon la revendication 1, caractérisé par le fait que les dimensions des défauts d'une surface (10) peuvent être représentées au moyen d'un histogramme en relation avec leur nombre.
